(19)

Europäisches Patentamt

European Patent Office

Office européen des brevets

(11) **EP 4 699 875 A2**

(12) **EUROPEAN PATENT APPLICATION**

(43) Date of publication:
25.02.2026 Bulletin 2026/09

(51) International Patent Classification (IPC):
*B60T 7/22* (2006.01) *B60W 30/09* (2012.01)

(21) Application number: 25215197.2

(22) Date of filing: 12.11.2025

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 27.04.2025 CN 202510548649

(71) Applicant: **Shanghai Horizon Intelligent Automotive Technology Co., Ltd.**
**Shanghai Jiading District 201800 (CN)**

(72) Inventors:
• **Pei, Xizhe**
  **Shanghai, 201800 (CN)**
• **QI, Lianjun**
  **Shanghai, 201800 (CN)**
• **ZENG, Luyao**
  **Shanghai, 201800 (CN)**
• **HE, Zhanli**
  **Shanghai, 201800 (CN)**

(74) Representative: **Patentanwälte Magenbauer & Kollegen**
**Partnerschaft mbB**
**Plochinger Straße 109**
**73730 Esslingen (DE)**

(54) **PARAMETER DETERMINATION METHOD AND APPARATUS FOR AEB FUNCTION, MEDIUM, AND DEVICE**

(57) Embodiments of the present disclosure disclose a parameter determination method and apparatus for an AEB function, a medium, and a device. The method includes: configuring current parameters of the AEB function of a vehicle; performing testing on the vehicle based on a test scenario to obtain behaviour of the vehicle under the current parameters, the behaviour being one of pre-collision braking to stop and collision; performing adjustment on the current parameters based on the behaviour to obtain adjusted parameters; and determining the adjusted parameters as target parameters of the AEB function in response to the adjusted parameters meeting an expected condition.

Test Scenario

Obstacle 14

Obstacle 12

Obstacle 13

Ego Vehicle 11

**FIG. 1**

EP 4 699 875 A2

## Description

### TECHNICAL FIELD

The present disclosure relates to parameter calibration technologies, and in particular, to a parameter determination method and parameter determination apparatus for an AEB (Automatic Emergency Braking) function, a medium, and a device.

### BACKGROUND

In the field of intelligent driving, an AEB function is an active safety control function of a vehicle during traveling and can automatically take measures to assist a driver in avoiding or mitigating collision when the driver brakes too late or with insufficient braking force, or takes no braking measures at all. In the related art, a TTC (Time to Collision) is typically calculated based on kinematic states of an ego vehicle and an obstacle, and then whether to trigger the AEB function is determined based on a magnitude relationship between the TTC and a threshold. Due to a possible estimation error in the TTC, missed or false triggering of the AEB function may occur by the determination of whether to initiate emergency braking based on simple calculation. Missed triggering exposes the vehicle to a risk of severe collision, failing to meet increasingly higher safety requirements. False triggering causes the vehicle to perform emergency braking while there is no collision risk, affecting user's riding experience, and failing to meet requirements of riding comfort. In view of this problem, a probability-based risk assessment method has emerged. In a probabilistic risk assessment method, a collision risk between the ego vehicle and a target obstacle is represented as a probability value between 0 to 1 (expressed as a collision probability) in a more complex manner, such as integration, and whether to perform AEB braking is determined based on the magnitude of the collision probability. Such a probabilistic AEB function typically has relatively complex functional parameters (or parameters for short), and how to effectively calibrate relevant parameters has become a technical problem that urgently needs to be resolved.

### SUMMARY

Embodiments of the present disclosure provide a parameter determination method and apparatus for an AEB function, a medium, and a device, which may effectively determine parameters of a probabilistic AEB function and improve effectiveness of the parameters.

According to a first aspect of the embodiments of the present disclosure, there is provided a parameter determination method for an AEB function, including: configuring current parameters of the AEB function of a vehicle; performing testing on the vehicle based on a test scenario to obtain behaviour of the vehicle under the current parameters, the behaviour being one of pre-collision braking to stop and collision; performing adjustment on the current parameters based on the behaviour to obtain adjusted parameters; and determining the adjusted parameters as target parameters of the AEB function in response to the adjusted parameters meeting an expected condition.

According to a second aspect of the embodiments of the present disclosure, there is provided a parameter determination apparatus for an AEB function, including: a first processing module, configured for configuring current parameters of the AEB function of a vehicle; a second processing module, configured for performing testing on the vehicle based on a test scenario to obtain behaviour of the vehicle under the current parameters, the behaviour being one of pre-collision braking to stop and collision; a third processing module, configured for performing adjustment on the current parameters based on the behaviour to obtain adjusted parameters; and a fourth processing module, configured for determining the adjusted parameters as target parameters of the AEB function in response to the adjusted parameters meeting an expected condition.

According to a third aspect of the embodiments of the present disclosure, there is provided a computer readable storage medium, on which a computer program is stored, where the computer program is used for performing the parameter determination method for an AEB function according to any one of the above embodiments of the present disclosure.

According to a fourth aspect of the embodiments of the present disclosure, there is provided an electronic device, including: a processor; and a memory, configured for storing instructions executable by the processor, where the processor is configured for reading the executable instructions from the memory, and executing the instructions to implement the parameter determination method for an AEB function according to any one of the above embodiments of the present disclosure.

According to a fifth aspect of the embodiments of the present disclosure, there is provided a computer program product, where when instructions in the computer program product are executed by a processor, the parameter determination method for an AEB function according to any one of the above embodiments of the present disclosure is performed.

Based on the parameter determination method and apparatus for an AEB function, the medium, and the device that are provided in the embodiments of the present disclosure, current parameters of the AEB function of a vehicle are configured, the testing is performed on the vehicle based on a test scenario to obtain behaviour of the vehicle under the current parameters, the adjustment is then performed on the current parameters based on the behaviour of the vehicle under the current parameters to obtain adjusted parameters, and the adjusted parameters are determined as target parameters of the AEB function in response to the adjusted parameters meeting an expected condition. The adjustment of the parameters of the AEB function of the vehicle based on real behaviour of the vehicle in the test scenario enables the obtained target parameters to match a vehicle type of the vehicle, performance of a sensor, and performance of an actuator, thereby ensuring effectiveness of the AEB function. In addition, the parameter determination method for an AEB function in the embodiments of the present disclosure may be applied to determination of parameters of an AEB function of vehicles with different vehicle types, different sensor performance characteristics, and different actuator performance characteristics, and may be highly versatile and generalized.

## BRIEF DESCRIPTION OF DRAWINGS

FIG. 1 is a diagram illustrating a scenario to which the present disclosure is applicable;

FIG. 2 is a schematic flowchart illustrating a parameter determination method for an AEB function according to an exemplary embodiment of the present disclosure;

FIG. 3 is a schematic flowchart illustrating a parameter determination method for an AEB function according to another exemplary embodiment of the present disclosure;

FIG. 4 is a schematic flowchart illustrating a parameter determination method for an AEB function according to still another exemplary embodiment of the present disclosure;

FIG. 5 is a schematic flowchart illustrating a parameter determination method for an AEB function according to yet another exemplary embodiment of the present disclosure;

FIG. 6 is a schematic diagram illustrating three stages of a brake according to an exemplary embodiment of the present disclosure;

FIG. 7 is a schematic flowchart illustrating a parameter determination method for an AEB function according to still another exemplary embodiment of the present disclosure;

FIG. 8 is a schematic diagram illustrating a collision area according to an exemplary embodiment of the present disclosure;

FIG. 9 is a schematic flowchart illustrating a parameter determination method for an AEB function according to yet another exemplary embodiment of the present disclosure;

FIG. 10 is a schematic flowchart illustrating a parameter determination method for an AEB function according to still another exemplary embodiment of the present disclosure;

FIG. 11 is a block diagram illustrating a procedure of a parameter determination method for an AEB function according to an exemplary embodiment of the present disclosure;

FIG. 12 is a schematic diagram illustrating a structure of a parameter determination apparatus for an AEB function according to an exemplary embodiment of the present disclosure;

FIG. 13 is a schematic diagram illustrating a structure of a parameter determination apparatus for an AEB function according to another exemplary embodiment of the present disclosure; and

FIG. 14 is a diagram illustrating a structure of an electronic device according to an embodiment of the present disclosure.

## DETAILED DESCRIPTION OF THE EMBODIMENTS

To explain the present disclosure, exemplary embodiments of the present disclosure will be described in detail below with reference to the accompanying drawings. Apparently, the described embodiments are merely some, not all, of embodiments of the present disclosure. It should be understood that, the present disclosure is not limited by the exemplary embodiments.

It should be noted that the relative arrangement of components and steps, numerical expressions, and numerical values set forth in these embodiments do not limit the scope of the present disclosure, unless otherwise specifically stated.

Overview of Disclosure

In a process of implementing the present disclosure, the inventors found that in the related art of an AEB function, a TTC is typically calculated based on kinematic states of an ego vehicle and an obstacle, and then whether to brake is determined based on a magnitude relationship between the TTC and a threshold, this method of which is referred to as a deterministic risk assessment method. Due to a possible estimation error in the TTC, missed or false triggering of the AEB function may occur by this simple method of calculating a collision risk. Missed triggering exposes the vehicle to a risk of severe collision accident, failing to meet increasingly higher safety requirements. False triggering causes the vehicle to perform emergency braking while there is no collision risk, affecting riding experience of a user, and failing to meet requirements of riding comfort. In view of this problem, a probability-based risk assessment method has emerged. In the probabilistic risk assessment method, a collision risk between the ego vehicle and a target obstacle is represented as a probability value between 0 to 1 (expressed as a collision probability) in a more complex manner, such as integration, and whether to perform AEB braking is determined based on the magnitude of the collision probability. Such a probabilistic AEB function typically has relatively complex functional parameters (or parameters for short), and how to effectively calibrate relevant parameters has become a technical problem that urgently needs to resolved.

Exemplary Overview

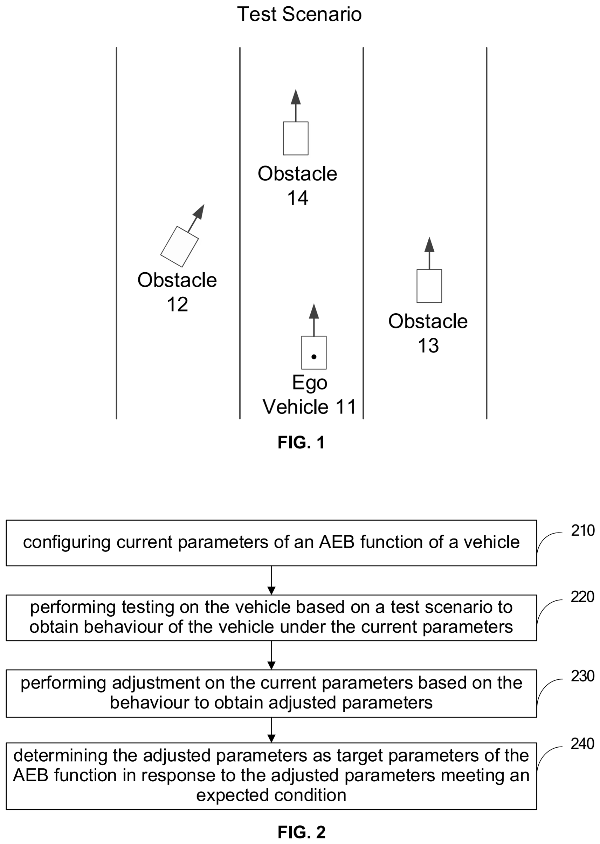

FIG. 1 illustrates an exemplary application scenario of a parameter determination method for an AEB function the present disclosure. As shown in FIG. 1, for any vehicle (that is, an ego vehicle) 11, the vehicle 11 may be placed in a test scenario, where there may be one or more obstacles, such as an obstacle 12, an obstacle 13, and an obstacle 14 in FIG. 1. The any obstacle may be a dynamic obstacle or a static obstacle. For a dynamic obstacle, an arrow on the obstacle shown in the figure may indicate a direction of movement of the obstacle. For a static obstacle, an arrow on the obstacle may indicate an orientation of the obstacle. A specific obstacle in the test scenario may be set based on an actual requirement. Then, parameters of the AEB function of the vehicle 11 may be determined by using the parameter determination method for an AEB function of the embodiments of the present disclosure. The parameter determination method for an AEB function of the embodiments of the present disclosure may be performed by a parameter determination apparatus for an AEB function of the embodiments of the present disclosure. The parameter determination apparatus for an AEB function of the embodiments of the present disclosure may be disposed in an electronic device, which may include, for example, any device capable of performing data processing and data storage, such as an in-vehicle platform, a smartphone, a notebook computer, a server, or a cloud server. The electronic device may serve as a test platform, configured for performing testing on the vehicle 11 based on the test scenario. Specifically, current parameters of the AEB function of the vehicle 11 may be configured through communicating with the vehicle 11 by the test platform, and then, the testing is performed on the vehicle 11 based on the test scenario to obtain behaviour of the vehicle 11 under the current parameters, where for any test scenario, the behaviour of the vehicle 11 may be one of pre-collision braking to stop and collision. Subsequently, the adjustment may be performed on the current parameters based on the behaviour of the vehicle 11 to obtain adjusted parameters. In response to the adjusted parameters meeting an expected condition, the adjusted parameters are determined as target parameters of the AEB function.

In practical applications, the test scenario may be a real-field test scenario or a simulation test scenario. The simulation test scenario may be a hardware-in-the-loop simulation system that is built based on an intelligent driving controller, an actuator, a customized video injection board, and a master computer (that is, the test platform) of the vehicle 11, to simulate a performance status of the vehicle 11 in a real scenario. For the real-field test scenario, an obstacle in the test scenario may be a real obstacle or a virtual obstacle. The real obstacle means setting a real obstacle in the test scenario, for example, a real obstacle vehicle being driving in the test scenario based on a preset driving trajectory, for another example, setting a real static obstacle at a preset position in the test scenario, and so on. Optionally, the test platform may communicate with the obstacle to obtain state information of the obstacle. Optionally, to ensure test safety, the obstacle in the test scenario may be a virtual obstacle. The virtual obstacle may mean that the test platform simulates a state of the obstacle in the test scenario by an obstacle model. During the test of the vehicle 11, the state of the obstacle in the test scenario is converted in real time into sensor data based on a perception feature of a sensor of the vehicle 11, and the sensor data is provided to an intelligent driving system of the vehicle 11. It is determined, based on the current parameters by an AEB function of the intelligent driving system of the vehicle 11, whether to issue an automatic emergency braking signal (which may be referred to as a brake signal for short). When it is determined to issue a brake signal, the brake signal is issued to the actuator of the vehicle 11. The actuator of the vehicle 11 performs an AEB action to complete the test of the current test scenario. The test platform may obtain behaviour of the vehicle 11 under the current parameters by monitoring state information of the vehicle 11 throughout the test in combination with the state information of the obstacle in the test scenario. Then, the adjustment is then performed on the current parameters based on the behaviour of the vehicle 11 to obtain adjusted parameters. The above test scenario is only an exemplary scenario. In practical applications, the test scenario is not limited to the above specific example.

Exemplary Method

FIG. 2 is a schematic flowchart illustrating a parameter determination method for an AEB function according to an exemplary embodiment of the present disclosure. The method in this embodiment may be applied to an electronic device (or referred to as a test platform), which is specifically, for example, an in-vehicle platform, a server, a terminal device, and other electronic devices. As shown in FIG. 2, the method in this embodiment of the present disclosure may include steps: Step 210: Configuring current parameters of the AEB function of a vehicle.

The current parameters may be preset initial parameters, or may be parameters that have undergone one or more adjustments. The current parameters may include one or more parameters (which may be referred to as sub-parameters). After the parameters of the AEB function are determined (calibrated), the vehicle may determine, based on sensed environmental data, whether to issue a brake signal to implement the AEB function.

In some optional embodiments, the current parameters may include one or more of a first sub-parameter, a second sub-parameter, a third sub-parameter, and the like, which are adjustable parameters.

In some optional embodiments, in a case that the AEB function issues a brake signal based on a reachable set, the first sub-parameter is a reachable set distance offset. The second sub-parameter is a brake performance parameter of the vehicle. For example, the second sub-parameter may include at least one of a maximum brake deceleration and a brake response time. The third sub-parameter is a collision area parameter for assessing a collision risk.

In some optional embodiments, the current parameters may further include other parameters or sub-parameters not requiring adjustment needed by the AEB function. Alternatively, other parameters or sub-parameters not requiring adjustment may be pre-configured in the AEB function, then the current parameters may not include these parameters not requiring adjustment.

In some optional embodiments, issuing a brake signal based on a reachable set may involve determining whether to issue a brake signal based on a reachable set in a velocity-distance (or referred to as travel distance) space and probability distribution information of a velocity and a distance of the vehicle at a future time. The reachable set is used for representing a set of all states that the vehicle are reachable at a given initial state and under control constraints. A backward reachable set involves backward deducing, from a target state, which initial state can reach the target state under the control constraints. In a case that it is determined that a collision risk exists between the vehicle and an obstacle at a future time, a state of the vehicle at a collision time is determined as a target state, and initial states at a plurality of times before the collision time are backward deduced, then the target state of the vehicle at the collision time and the initial states at the plurality of times before the collision constitute the backward reachable set. Taking a velocity of the vehicle and a distance traveled by the vehicle to a collision point as physical quantities for describing the state of the vehicle, a velocity-distance space is determined based on a coordinate system that is established by using the velocity of the vehicle (or referred to as a velocity variable) and the distance traveled by the vehicle to the collision point (or referred to as a distance variable) as coordinate axes, and then a reachable set in the velocity-distance space is backward deduced from the target state of the vehicle at the collision time.

The probability distribution information of the velocity and the distance of the vehicle at the future time refers to two-dimensional probability distribution information of the velocity of the vehicle at the future time and the distance traveled by the vehicle to the collision point at the future time, and may be expressed as a two-dimensional probability distribution ellipse. By the AEB function, a collision risk value at the future time may be determined based on an integral result (or referred to as an integral value) of the two-dimensional probability distribution information of the vehicle at the future time in a reachable area corresponding to the reachable set, and then it may be determined, based on a magnitude relationship between the collision risk value at the future time and a preset collision risk threshold, whether to issue a brake signal, that is, a trigger state of the AEB function may be determined. If the trigger state represents "triggered", it indicates that a brake signal is to be issued. If the trigger state represents "not triggered", it indicates that a brake signal is not to be issued for the time being. If a collision risk value at a certain future time is determined to be greater than the collision risk threshold, it indicates that the vehicle may evolve to the target state at the collision time after a certain period of time of dynamic evolution elapses while the vehicle travels based on a velocity and a distance at the future time, that is, there is a high probability that collision may occur between the vehicle and an obstacle, then a time headway (THW) of the future time relative to a current time may be compared with an actuator response time (or referred to as a brake response time) of the vehicle, and whether to issue a brake signal at the current time is determined based on a comparison result. For example, if the THW is greater than the actuator response time, or a difference between the THW and the actuator response time is greater than a duration threshold, it indicates that a brake signal may be issued even later, not issuing the brake signal for the time being. If the THW is less than or equal to the actuator response time, or a difference between the THW and the actuator response time is less than or equal to a duration threshold, it indicates that a brake signal has to be issued at the current time; otherwise, collision cannot be avoided at the future time.

In some optional embodiments, the reachable set distance offset is an offset in a distance dimension of a target subset in the velocity-distance space in which the vehicle collides with the obstacle. The target subset is determined based on a target reachable area consisting of the target state of the vehicle at the collision time (denoted as a time $T_C$).

In some optional embodiments, the maximum brake deceleration refers to a maximum value of a deceleration of the vehicle during braking by a brake in an AEB process. In practical applications, brakes of different vehicles may vary in performance, and a maximum brake deceleration that a brake may actually achieve may not reach an ideal maximum brake deceleration provided by a manufacturer. If it is determined, by the AEB function based on the ideal maximum brake deceleration, whether to issue a brake signal, it may easily cause the AEB function to issue a brake signal too late to avoid collision. Therefore, the maximum brake deceleration may be adjusted for a specific vehicle, so that the maximum brake deceleration may match actual performance of the brake of the vehicle.

In some optional embodiments, the collision area parameter for assessing a collision risk refers to a relevant parameter of a collision area based on which the collision risk between the vehicle and the obstacle is determined. The collision area parameter may include a parameter for determining a boundary of the collision area. Collision risk assessment refers to an assessment of a collision probability between a vehicle and an obstacle, that is, determining a collision probability between an ego vehicle and an obstacle based on kinematic information of the ego vehicle and kinematic information of the obstacle, the collision probability being a value within a range of 0 to 1. Comparing the collision probability with a preset probability threshold, if the collision probability is greater than a preset probability threshold, it is determined that a collision risk exists between the ego vehicle and the obstacle, and it is required to further assess, by the AEB function, a latest braking point (or referred to as a latest braking time) for the obstacle, that is, it is determined whether a current time is the latest braking time. If the current time is the latest braking time, the brake signal needs to be issued; and if the current time is not the latest braking time, the brake signal is not to be issued for the time being, to avoid braking too early or too late. If the brake signal is issued immediately upon determining that there is a collision risk with the obstacle, it may cause braking too early, leading to cases of numerous false braking for the vehicle in a real road traffic environment, affecting riding experience of a passenger. If braking occurs too late, collision cannot be avoided, rendering the AEB function ineffective. Therefore, after it is determined that there is a collision risk between the ego vehicle and a certain obstacle by assessing a collision risk based on a collision area, whether to issue a brake signal at the current time is further determined, to ensure that the vehicle performs emergency braking before the latest braking time, and avoiding or reducing false triggering of emergency braking while ensuring avoidance of collision.

In some optional embodiments, a primary obstacle may be screened out, by a high-risk obstacle screening function, from obstacles obtained by a perception function. During collision risk assessment, only a collision risk between the ego vehicle and the primary obstacle needs to be assessed, thereby reducing collision risk assessment for unnecessary obstacles and improving processing efficiency. Specifically, all obstacle information within a perception range of a sensor may be acquired from the perception function. The obstacle information may include state information of each obstacle, such as position, size, orientation, velocity, and angular velocity. Then, based on risk indicators such as a TTC and a THW, an obstacle with a highest risk may be assessed as the primary obstacle. Then, a collision risk of the primary obstacle is assessed based on kinematic information of the ego vehicle and kinematic information of the obstacle. The kinematic information of the ego vehicle includes, but is not limited to, position, velocity, acceleration, yaw, yaw rate, and other information. The kinematic information of the obstacle includes, but is not limited to, position, size, velocity, acceleration, yaw, yaw rate, and other information of the obstacle in a local coordinate system of the vehicle (that is, an ego-vehicle coordinate system). The size of the obstacle may include length, width, and the like of the obstacle.

In some optional embodiments, the collision risk between the ego vehicle and the primary obstacle (which may also be referred to as collision risk assessment information) may be assessed based on a collision risk probabilistic assessment method. For example, trajectory information of the ego vehicle at at least one future time may be predicted based on kinematic information of the ego vehicle at the current time, and trajectory information of an obstacle (for example, the primary obstacle) at each future time is predicted based on kinematic information of the obstacle at the current time. A collision area type for the ego vehicle and the obstacle is determined based on the trajectory information of the ego vehicle at each future time and the trajectory information of the obstacle at each future time. Different types of collision areas correspond to different collision area parameters. Then, a collision area is determined based on a collision area parameter corresponding to the determined collision area type. For example, during a test, by the AEB function of the vehicle, a collision area is determined based on the third sub-parameter in the current parameters; and then, a collision risk is determined based on a relative relationship between the collision area and the trajectory information of the ego vehicle and the obstacle at each future time. For example, if trajectories of the ego vehicle and the obstacle fall within the collision area, it is determined that a collision risk exists.

In some optional embodiments, the predicted trajectory information of the ego vehicle at each future time may be first position probability distribution information of the ego vehicle at each future time, and the predicted trajectory information of the obstacle at each future time may be second position probability distribution information of the obstacle at each future time, both the first position probability distribution information and the second position probability distribution information being two-dimensional probability distribution information of a lateral position and a longitudinal position. The two-dimensional probability distribution information may be represented by a two-dimensional probability distribution ellipse, conforming with two-dimensional normal distribution. The collision risk between the ego vehicle and the obstacle may be determined based on the first position probability distribution information, the second position probability distribution information, and the collision area. The collision risk may include two cases: existence of a collision risk and inexistence of a collision risk between the vehicle and the obstacle at the future time. Optionally, collision indication vector distribution information may be determined based on the first position probability distribution information and the second position probability distribution information, and then, a collision risk is determined based on a magnitude relationship between an integral value (that is, a collision probability) of the collision indication vector distribution information in the collision area and a preset risk threshold. A collision indication vector refers to a vector pointing to the position of the obstacle (for example, a geometric center point of the obstacle) from the position of the ego vehicle (for example, a geometric center point or a rear axle center of the ego vehicle). The collision indication vector represents the position of the obstacle relative to the ego vehicle. At the future time, a predicted position of the ego vehicle and a predicted position of the obstacle conform with probability distribution, and thus the position of the obstacle relative to the ego vehicle has a certain probability distribution characteristic, then the collision indication vector distribution information represents distribution information of the collision indication vector. In other words, for each future time, collision indication vector distribution information corresponding to the future time refers to vector distribution information pointing to second position probability distribution information corresponding to the future time from first position probability distribution information corresponding to the future time. That is, the collision indication vector distribution information represents a spatial position distribution relationship of the obstacle relative to the vehicle at the future time. The collision indication vector distribution information may include an mean and a variance of the collision indication vector, conform withing a certain probability distribution, e.g., a normal distribution (that is, a Gaussian distribution). The mean and the variance of the collision indication vector are obtained by superimposing the first position probability distribution information and the second position probability distribution information. The superimposing complies with a superimposition rule between Gaussian distributions, which is not described in detail. This is only an exemplary method for determining a collision risk, and in practical applications, is not limited to the above exemplary method.

Step 220: Performing testing on the vehicle based on a test scenario to obtain behaviour of the vehicle under the current parameters.

For a test scenario, the behaviour of the vehicle is one of pre-collision braking to stop and collision. For the test scenario, reference may be made to the above content, and details are not described herein. The performing testing on the vehicle based on a test scenario means assessing a collision risk based on an obstacle status in the test scenario, whether a current time is a latest braking time when it is determined that there is the collision risk, and so on, while the vehicle travels in the test scenario, that is, corresponding functional processing is performed by the AEB function of the vehicle based on the current parameters in the test scenario to test the behaviour of the vehicle under the current parameters.

In some optional embodiments, there may be one or more test scenarios. For example, the test scenario may be set based on a requirement of New Car Assessment Program (NCAP). At least one different element exists between any two test scenarios to test behaviour of the vehicle in different test scenarios. The element may include, for example, obstacle number, obstacle type, obstacle position, obstacle velocity, obstacle acceleration, obstacle direction, starting position of the ego vehicle, initial planned path of the ego vehicle, velocity of the ego vehicle when reaching a specified position or at a specified time, and acceleration of the ego vehicle when reaching a specified position or at a specified time. For a case of a plurality of test scenarios, behaviour of the vehicle in each of the test scenarios may be obtained for performing adjustment on the current parameters.

Step 230: Performing adjustment on the current parameters based on the behaviour to obtain adjusted parameters.

For any test scenario, the behaviour includes one of pre-collision braking to stop and collision, and different behaviours corresponds to different parameter adjustment rules. After the behaviour of the vehicle under the current parameters is determined, the adjustment is then performed on the current parameters based on a parameter adjustment rule corresponding to the behaviour, to obtain adjusted parameters.

In some optional embodiments, for one type of behaviour, one or more sub-parameters in the current parameters may be adjusted to obtain the adjusted parameters. For example, the above first sub-parameter is adjusted, or the above first sub-parameter and second sub-parameter are adjusted. For a sub-parameter to be adjusted, an adjusted sub-parameter corresponding to the sub-parameter is used as a sub-parameter in the adjusted parameters. For a sub-parameter not to be adjusted, the sub-parameter is used as a sub-parameter in the adjusted parameters.

In some optional embodiments, to ensure effectiveness of parameter adjustment, only one type of sub-parameter in the current parameters may be adjusted based on behaviour in a single test, and then, testing may be performed again based on the adjusted parameter, facilitating the determination of an impact of the parameter adjustment on the behaviour of the vehicle. For example, if the behaviour is pre-collision braking to stop, it indicates that the vehicle can effectively avoid collision under the current parameters. Then, it may be determined, based on a braking-to-stop distance and an expected braking-to-stop distance, whether the vehicle brakes too early. If the vehicle brakes too early, the first sub-parameter is adjusted, and thereby the braking-to-stop distance of the vehicle is adjusted, so to prevent the vehicle from braking too early, thereby causing the braking-to-stop distance of the vehicle to meet a requirement of the expected braking-to-stop distance, for example, causing a deviation of the braking-to-stop distance from the expected braking-to-stop distance to fall within a specified deviation threshold range, thus effectively avoiding collision and avoiding braking too early.

Step 240: Determining the adjusted parameters as target parameters of the AEB function in response to the adjusted parameters meeting an expected condition.

The expected condition means that the vehicle can successfully stop by braking and the braking-to-stop distance meets the requirement of the expected braking-to-stop distance.

In some optional embodiments, after the parameter adjustment, the adjusted parameters may be used as current parameters to configure the AEB function of the vehicle. Then, the testing may be performed again for behaviour of the vehicle under the adjusted parameters based on the test scenario, and it is determined, based on the behaviour, whether the vehicle can successfully stop by braking and whether the braking-to-stop distance meets the requirement of the expected braking-to-stop distance. If the braking-to-stop distance meets the requirement of the expected braking-to-stop distance, it indicates that the adjusted parameters meet the expected condition, and the adjusted parameters may be determined as target parameters of the AEB function. At this point, the test may be ended, and the target parameters of the AEB function are obtained. If the adjusted parameters do not meet the expected condition, adjustment may continue to be performed on the current parameters (which are the above adjusted parameters in this case).

According to the parameter determination method for an AEB function provided in this embodiment, current parameters of the AEB function of a vehicle are configured, the testing is performed on the vehicle based on a test scenario to obtain behaviour of the vehicle under the current parameters, the adjustment is then performed on the current parameters based on the behaviour of the vehicle under the current parameters to obtain adjusted parameters, and the adjusted parameters are determined as target parameters of the AEB function in response to the adjusted parameters meeting an expected condition. The adjustment of the parameters of the AEB function of the vehicle based on real behaviour of the vehicle in the test scenario enables the obtained target parameters to match a vehicle type of the vehicle, performance of a sensor, and performance of an actuator, thereby ensuring effectiveness of the AEB function. In addition, the parameter determination method for an AEB function in the embodiments of the present disclosure may be applied to determination of parameters of an AEB function of vehicles with different vehicle types, different sensor performance characteristics, and different actuator performance characteristics, demonstrating high versatility and generalization capability.

In some optional embodiments, the AEB function issues a brake signal based on a reachable set; a first sub-parameter is a reachable set distance offset; a second sub-parameter is a brake performance parameter of the vehicle, and may include at least one of a maximum brake deceleration and a brake response time; and a third sub-parameter is a collision area parameter for assessing a collision risk. For the first sub-parameter, the second sub-parameter, and the third sub-parameter, reference may be made to the above content, and details are not described herein again.

In some optional embodiments, a velocity-distance coordinate system is established by using a distance traveled by the vehicle to a collision point as a lateral axis and a velocity of the vehicle as a longitudinal axis, where a space corresponding to the velocity-distance coordinate system is a velocity-distance space. An origin of the coordinate system is a collision critical point, that is, a point at which the velocity of the vehicle is 0 m/s and the distance traveled by the vehicle to the collision point is 0 m. In other words, assuming that a collision critical point (that is, a point at which the velocity is exactly 0 when the vehicle just comes into contact with the collision point) at which the vehicle reaches is an origin, the distance traveled by the vehicle to the collision point before the vehicle reaches the collision point is a negative value, and the distance traveled by the vehicle to the collision point during and after passing through the collision point by the vehicle is a positive value. The collision point is an intersection of trajectories of the vehicle and the obstacle at a future time. For example, if a predicted trajectory of the vehicle at a future time and a trajectory of the obstacle at the future time intersect with each other at the future time $T_C$, an intersection of the trajectories of the vehicle and the obstacle at the time $T_C$ is a collision point, where the time $T_C$ is referred to as a collision time corresponding to the collision point. The trajectory of the vehicle at the future time may be obtained through prediction based on a kinematic model corresponding to the vehicle. The trajectory of the obstacle at the future time may be obtained through prediction based on a kinematic model corresponding to the obstacle. The kinematic model corresponding to the vehicle may be determined based on motion characteristics of the vehicle. For example, the kinematic model corresponding to the vehicle may be a uniform motion model or a uniformly accelerated motion model, which is not specifically limited. The kinematic model corresponding to the obstacle may be determined based on motion characteristics of the obstacle. For example, the kinematic model corresponding to the obstacle may be a uniform motion model or a uniformly accelerated motion model. The distance (or referred to as travel distance) traveled by the vehicle to the collision point refers to a length of a driving trajectory of the vehicle to the collision point.

The reachable set may include one or more reachable subsets (or referred to as reachable areas). In some optional embodiments, in a case that it is determined that a collision risk exists between the vehicle and the obstacle at the future time, a target reachable area of a target state of the vehicle in the velocity-distance space at the collision time (that is, the time $T_C$) is determined, a target subset of the reachable set is determined based on the target reachable area, backward deduction is performed based on the target reachable area to determine initial reachable areas at a plurality of times before the time $T_C$, and initial subsets of the reachable set at the plurality of times are determined based on the initial reachable areas. Because each of the initial subsets of the reachable set is obtained through backward deduction based on the target subset of the reachable set, and the target subset of the reachable set is determined based on the target reachable area of the target state of the vehicle in the velocity-distance space at the time $T_C$ for the vehicle and the obstacle, an initial reachable area corresponding to each of the initial subsets of the reachable set may evolve to the target reachable area after a certain period of time of dynamic evolution. The target reachable area includes various possible state points defined by velocities and distances in a process from when the vehicle reaches the collision critical point to when the vehicle passes through the collision point, for example, state points defined by various velocities and distances, including velocities ranging from 0 m/s to $V_{max}$ m/s, and distances ranging from 0 m to $d_{max}$ m.

In some optional embodiments, the target subset may be determined based on a velocity range and a distance range within which collision between the vehicle and the obstacle may occur at the collision time (that is, the time $T_C$). For example, if the velocity range is expressed as 0 to $V_{max}$ m/s, and the distance range is expressed as 0 to $d_{max}$ m, (0, $V_{max}$), ($d_{max}$, 0), and ($d_{max}$, $V_{max}$) are the other three corner points of the target reachable area. A rectangular area formed by the four corner points is the target reachable area, and the target reachable area constitutes the target subset, that is, any velocity value and any distance value within the rectangular area define one state point, and a set of all state points within the rectangular area is referred to as a target subset. The reachable set distance offset (that is, the first sub-parameter) refers to an offset applied to a horizontal coordinate of a state point in the target subset. If the reachable set distance offset is denoted as $\mathbf{sa_{offset}}$, an overall offset of the target subset may be achieved by offsetting horizontal coordinates of the four corner points of the target subset, where the four corner points after the offset are ($0+sa_{offset}$, 0), $0+sa_{offset}$, $V_{max}$), ($d_{max}+sa_{offset}$, 0), and ($d_{max}+sa_{offset}$, $V_{max}$). Because the reachable set distance offset is used for laterally offsetting of the target subset of the reachable set, the target subset before the offset represents a set of target states of the vehicle at the collision time under ideal conditions. However, in actual working conditions, it is difficult for a vehicle to achieve an ideal state due to impacts of many factors such as a vehicle type, vehicle brake performance, a sensor perception error, and a perception algorithm model error. Therefore, the target subset is adjusted through the reachable set distance offset to meet a requirement of the vehicle under actual working conditions. If the target subset is offset in a lateral positive direction of the velocity-distance space (that is, to the right of the coordinate origin), it indicates that the distance traveled by the vehicle to the collision point in the target state at the collision time of the vehicle is offset to a collision process from the collision critical point, thereby the reachable set being offset entirely to the right, wherein when the reachable set is used to determine the trigger state of the AEB function, a latest issuing time is caused to be later than that before the offset, thus reducing the braking-to-stop distance of the behaviour of the vehicle. On the contrary, if the target subset is offset in a lateral negative direction (that is, to the left of the coordinate origin) of the velocity-distance space, it indicates that a distance in the target state of the vehicle at the collision time is offset from the collision critical point to a state of not being in contact with the obstacle, thereby the reachable set being offset entirely to the left, wherein when the reachable set is used to determine the trigger state of the AEB function, a latest issuing time is caused to be earlier than that before the offset, thus increasing the braking-to-stop distance of the behaviour of the vehicle. Therefore, the reachable set distance offset may affect a final braking-to-stop distance of the vehicle. Adjusting the target subset of the reachable set by adjusting the reachable set distance offset may adjust the braking-to-stop distance of the vehicle, thereby causing the braking-to-stop distance of the vehicle to conform with the expected braking-to-stop distance.

In some optional embodiments, the target subset is determined based on the target reachable area of the target state of the vehicle in the velocity-distance space at the collision time, herein, the target reachable area being the target reachable area obtained after the offset based on the reachable set distance offset (that is, the first sub-parameter) as above, and therefore, to ensure that the initial reachable areas of the reachable set can evolve to the target reachable area through dynamic evolution, one or more initial subsets may be generated through backward deduction of the target subset to obtain the reachable set. For example, backward deduction may be performed based on the target subset according to a preconfigured backward deduction state transition equation (or referred to as a backward deduction state transition rule) to obtain one or more initial subsets. The backward deduction state transition equation may be obtained through transformation based on a kinematic model. The kinematic model may include, for example, a uniformly accelerated motion model or a non-uniformly accelerated motion model (that is, a non-uniform motion model with variable acceleration). Optionally, in a case of using the reachable set to determine whether to issue a brake signal of emergency braking, the reachable set is a reachable set under an emergency braking state, and a uniformly accelerated motion model is used to determine the backward deduction state transition equation. A velocity change rate (that is, acceleration, or referred to as deceleration) is the maximum brake deceleration of the vehicle, serving as a control amount of the backward deduction process. The control amount is a maximum brake deceleration in the second sub-parameter. A backward deduction time step may be set based on an actual requirement, which is not specifically limited.

In some optional embodiments, based on an integral result, of distance and velocity probability distribution information (distribution information for short) of the vehicle at each future time, within reachable areas corresponding to one or more reachable subsets in the reachable set, a first collision risk value (which may be referred to as a first collision risk probability) of the vehicle that may collide with the obstacle when the vehicle travels based on the velocity and distance distribution information at the future time may be determined. Then, whether the vehicle may collide with the obstacle when the vehicle starts emergency braking at this future time is determined based on a magnitude relationship between the first collision risk value and a first collision risk threshold. For example, the future time being a time $T_j$, an integral result of velocity and distance distribution information of the vehicle at the time $T_j$ within a reachable area corresponding to a certain reachable subset $S_i$ in the reachable set being greater than the first collision risk threshold indicates that the vehicle may collide with the obstacle after a period of time of evolution if the vehicle travels based on the velocity and distance distribution information at the time $T_j$. Therefore, emergency braking needs to be started no later than the time $T_j$ to avoid occurrence of collision. Then, whether a current time is a latest issuing time for issuing a brake signal is determined based on the determined time $T_j$ at which the vehicle may collide with the obstacle. For example, because the brake has a certain response time, that is, a time from when the brake receives the brake signal to when the braking is started, the vehicle maintains a current velocity and travels at a constant velocity within the response time. The latest issuing time may be determined based on the time $T_j$ and duration of the brake response time of the vehicle. The target subset of the reachable set is denoted by $S_0$. The reachable set includes a first number of reachable subsets. A reachable subset $S_i$ represents an $i^{th}$ initial subset, in reverse time sequence from the target subset $S_0$, among the first number of reachable subsets. For example, in reverse time sequence, $S_0$ denotes the target subset corresponding to the time $T_C$ corresponding to the collision point, an initial subset corresponding to a time $T_{C-1}$ is denoted by $S_1$, an initial subset corresponding to a time $T_{C-2}$ is denoted by $S_2$, and so on. If the first number is m+1, an initial subset corresponding to a time $T_{C-m}$ is denoted by $S_m$, and an initial subset sequence in reverse time sequence is expressed as $S_1, S_2, ...,$ and $S_m$. Using the initial subset sequence of the reachable set in reverse time sequence as an example, if an integral result of velocity and distance distribution information of the vehicle at the time $T_j$ within the reachable area corresponding to the initial subset $S_i$ is greater than the first collision risk threshold, it indicates that there is a high probability that probability distribution of the distance and velocity of the vehicle at the time $T_j$ fall within the reachable area corresponding to the initial subset $S_i$, where there is a high probability that the probability distribution of the distance and velocity of the vehicle at the time $T_C$ falls within the target subset $S_0$ after a period of time of evolution, that is, collision occurs, if the vehicle travels based on velocity and distance distribution information at the time $T_j$. In further consideration of the duration of the brake response time, a latest issuing time for avoiding occurrence of collision may be determined. For example, a brake signal needs to be issued before a time (for example, a time $T_{j-t}$, t being a positive integer) whose THW with the time $T_j$ is greater than the duration of the brake response time, to avoid occurrence of collision. Whether a current time is the latest issuing time may be determined based on a relationship between the time $T_{j-t}$ and the current time. The brake response time is the brake response time in the second sub-parameter.

In some optional embodiments, the first number of initial subsets included in the reachable set is 1, or an initial subset is determined from a plurality of initial subsets included in the reachable set, with a number of 1 at the future time. In this case, if the brake response time is $t_r$, a time at which the brake response ends is a time $T_r$, and a current time is a time $T_0$, velocity and distance distribution information of the vehicle at a time $T_{r+1}$ may be predicted. This initial subset is an initial subset corresponding to the time $T_{r+1}$. For example, the collision time (that is, the time corresponding to the target subset) corresponding to the collision point is the time $T_C$, and during backward deduction, the time $T_C$ is the $0^{th}$ time in reverse time sequence. In this case, the initial subset generated from the time $T_C$ through backward deduction is an initial subset corresponding to a time $T_{c-(r+1)}$, and the backward time $T_{c-(r+1)}$ and the forward time $T_{r+1}$ are times corresponding to each other. Then, the trigger state of the AEB function may be determined based on the velocity and distance distribution information of the vehicle at the time $T_{r+1}$ and the initial subset corresponding to the time $T_{c-(r+1)}$. If an integral value of the velocity and distance distribution information at the time $T_{r+1}$ in an initial reachable area corresponding to the time $T_{c-(r+1)}$ (that is, the reachable area corresponding to the initial subset) is greater than the first collision risk threshold, the trigger state of the AEB function is determined to be triggered. In other words, the current time is the latest issuing time and a brake signal needs to be issued.

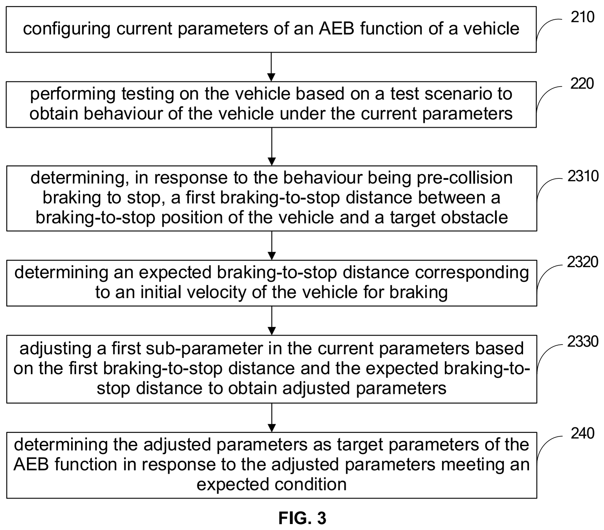

FIG. 3 is a schematic flowchart illustrating a parameter determination method for an AEB function according to another exemplary embodiment of the present disclosure.

In some optional embodiments, based on the above embodiment shown in FIG. 2, as shown in FIG. 3, step 230 of performing adjustment on the current parameters based on the behaviour to obtain adjusted parameters may include:

Step 2310: Determining, in response to the behaviour being pre-collision braking to stop, a first braking-to-stop distance between a braking-to-stop position of the vehicle and a target obstacle.

The target obstacle is an obstacle having a collision risk with the vehicle in the test scenario. For example, the target obstacle may be an obstacle in front of the vehicle in the test scenario. If the target obstacle is a static obstacle, pre-collision braking to stop refers to a case in which the vehicle successfully brakes to stop at a certain distance from the target obstacle without colliding with the target obstacle. To be specific, the velocity of the vehicle is 0 km/h (kilometers per hour), without contacting with the target obstacle. The braking-to-stop position of the vehicle refers to a position where the vehicle stops (that is, with the velocity of 0 km/h) after emergency braking. If the target obstacle is a dynamic obstacle, pre-collision braking to stop means that the vehicle decelerates to the same velocity as the target obstacle at a certain distance from the target obstacle, and the braking-to-stop position of the vehicle refers to a position where the vehicle decelerates to the same velocity as the target obstacle. For example, the target obstacle moving at a constant velocity, after the vehicle decelerates to the same velocity as the target obstacle, the vehicle is still in a brake state, with the velocity gradually becoming smaller than the target obstacle so that the distance between the vehicle and the target obstacle gradually increases, and therefore, no collision may occur. The braking-to-stop position of the vehicle may be a position in a coordinate system corresponding to the test scenario or in another coordinate system. The coordinate systems may be transformed into each other. The first braking-to-stop distance is a distance from the braking-to-stop position of the vehicle to the target obstacle at the time when the vehicle brakes to stop. The distance from the braking-to-stop position of the vehicle to the target obstacle refers to a distance traveled by the vehicle from the braking-to-stop position to the target obstacle (or referred to as a trajectory length).

In some optional embodiments, the first braking-to-stop distance may be determined based on a position of the vehicle at a braking-to-stop time and a position of the obstacle at the braking-to-stop time of the vehicle. Positions of the vehicle and the obstacle at any time may be obtained by monitoring states of the vehicle and the obstacle. For a monitoring method, reference may be made to the above content.

Step 2320: Determining an expected braking-to-stop distance corresponding to an initial velocity of the vehicle for braking.

The initial velocity of the vehicle for braking refers to a velocity of the vehicle when emergency braking is triggered or within the brake response time. The brake response time refers to a time from when the brake receives the brake signal to when the brake executes a braking action. Optionally, if the vehicle does not travel at a constant velocity, an average vehicle velocity during specified duration (or referred to as a time window) before the brake executes the braking action may be determined as the initial velocity of the vehicle for braking.

In some optional embodiments, different initial velocities may correspond to different expected braking-to-stop distances. For example, a mapping relationship between velocities and expected braking-to-stop distances may be set. The expected braking-to-stop distance corresponding to the initial velocity is determined based on the initial velocity of the vehicle for braking and the mapping relationship between velocities and expected braking-to-stop distances. The mapping relationship may be a continuous mapping relationship or a discrete mapping relationship. The continuous mapping relationship may be expressed by a mapping function of expected braking-to-stop distances with respect to velocities, where the expected braking-to-stop distance corresponding to the initial velocity is obtained based on a value of a mapping function corresponding to the initial velocity. The discrete mapping relationship may be expressed by expected braking-to-stop distances respectively corresponding to a plurality of discrete velocity values, where the expected braking-to-stop distance corresponding to the initial velocity is determined, through table lookup and/or an interpolation, based on a relationship between initial velocities and the discrete velocity values. For example, an expected braking-to-stop distance corresponding to velocity $v_1$ is $D_1$, an expected braking-to-stop distance corresponding to velocity $v_2$ is $D_2$, ..., and an expected braking-to-stop distance corresponding to velocity $v_m$ is $D_m$, m being a positive integer. The mapping relationship has a principle that the expected braking-to-stop distance increases as the velocity increases. For example, when the velocity is 10 km/h, the corresponding expected braking-to-stop distance is 0.8 m; when the velocity is 30 km/h, the corresponding expected braking-to-stop distance is 1.3 m; or when the velocity is 80 km/h, the corresponding expected braking-to-stop distance is 1.8 m. Optionally, the discrete mapping relationship may also be expressed by expected braking-to-stop distance ranges respectively corresponding to a plurality of velocity ranges. For example, an expected braking-to-stop distance range corresponding to a velocity range of $v_1$ to $v_2$ is $D_1$ to $D_2$. Optionally, within each velocity range and a corresponding expected braking-to-stop distance range, an expected braking-to-stop distance may be a linear or nonlinear function with respect to velocities. In practical applications, a specific velocity and a corresponding expected braking-to-stop distance may be set based on an actual requirement, which is not limited to the above example.

Step 2330: Adjusting a first sub-parameter in the current parameters based on the first braking-to-stop distance and the expected braking-to-stop distance to obtain the adjusted parameters.

The first sub-parameter is a reachable set distance offset, for details of which, reference may be made to the above content.

In some optional embodiments, the first sub-parameter may be adjusted based on a difference between the first braking-to-stop distance and the expected braking-to-stop distance. For example, if the current parameters are initialized parameters, the first sub-parameter is an initialized reachable set distance offset, where the initialized reachable set distance offset may be, for example, 0 or another preset value. If the current parameters are parameters after the previous adjustment, the first sub-parameter in the current parameters is a reachable set distance offset after the previous adjustment.

In some optional embodiments, if the adjusted first sub-parameter is denoted by $sa_{offset}$, the first braking-to-stop distance is denoted by $dis_{act}$, and the expected braking-to-stop distance corresponding to the initial velocity is denoted by $dis_{exp}$, the adjusted first sub-parameter is expressed as:

$$sa_{offset} = |dis_{act}| - |dis_{exp}| \qquad \text{Formula (1)}$$

In Formula (1), the first sub-parameter in the current parameters is adjusted to $sa_{offset}$, that is, the first sub-parameter in the adjusted parameters is $sa_{offset}$, and the other sub-parameters temporarily remain unchanged. In the velocity-distance space, both $dis_{act}$ and $dis_{exp}$ are negative values. If an absolute value $|dis_{act}|$ of the first braking-to-stop distance is greater than an absolute value $|dis_{exp}|$ of the expected braking-to-stop distance, it indicates that the AEB function issues a brake signal too early, where the adjusted first sub-parameter $sa_{offset}$ is a positive value, for offsetting the target subset to the lateral positive direction of the velocity-distance coordinate system, to cause a latest issuing time determined after the offset to be relatively later than a latest issuing time before the offset, thereby reducing an absolute value of a braking-to-stop distance of the behaviour of the vehicle, so that the first braking-to-stop distance of the vehicle under the adjusted first sub-parameter is closer to the expected braking-to-stop distance, thus avoiding emergency braking being too early. On the contrary, if the absolute value $|dis_{act}|$ of the first braking-to-stop distance is less than the absolute value $|dis_{exp}|$ of the expected braking-to-stop distance, it indicates that the AEB function issues a brake signal too late, where the adjusted first sub-parameter is a negative value, for adjusting the target subset to the lateral negative direction of the velocity-distance coordinate system, to increase the absolute value of the braking-to-stop distance of the behaviour of the vehicle, so that the first braking-to-stop distance of the vehicle under the adjusted first sub-parameter is closer to the expected braking-to-stop distance, thus avoiding emergency braking being too late.

According to this embodiment of the present disclosure, a first sub-parameter capable of affecting a braking-to-stop distance in current parameters is adjusted based on a first braking-to-stop distance and an expected braking-to-stop distance of actual behaviour of the vehicle, so that the braking-to-stop distance of the vehicle under the adjusted parameters is closer to the expected braking-to-stop distance, thereby avoiding issuing of a brake signal being too early or too late while ensuring pre-collision braking to stop.

In some optional embodiments, step 2320 of determining an expected braking-to-stop distance corresponding to an initial velocity of the vehicle for braking may include:

determining an upper velocity limit and a lower velocity limit of a target velocity range to which the initial velocity belongs; and performing interpolation based on a preconfigured first expected braking-to-stop distance corresponding to the upper velocity limit and a preconfigured second expected braking-to-stop distance corresponding to the lower velocity limit to obtain the expected braking-to-stop distance corresponding to the initial velocity.

When the mapping relationship between velocities and expected braking-to-stop distances is the above discrete mapping relationship, the plurality of discrete velocity values are sorted in ascending order or descending order to form a sequence. In this case, every two adjacent velocity values define a certain velocity range, for example, a velocity range of $v_1$ to $v_2$ as above, a velocity range of $v_1$ to $v_3$, ..., where $v_1 < v_2 < ... < v_m$. The target velocity range corresponding to the initial velocity is a velocity range in which the velocity magnitude of the initial velocity lies. For example, if the initial velocity is greater than or equal to $v_1$ and less than $v_2$, the target velocity range corresponding to the initial velocity is the velocity range of $v_1$ to $v_2$, with an upper velocity limit of $v_2$ and a lower velocity limit of $v_1$. A first expected braking-to-stop distance corresponding to the upper velocity limit is the expected braking-to-stop distance $D_2$ corresponding to the velocity $v_2$, and a second expected braking-to-stop distance corresponding to the lower velocity limit is the expected braking-to-stop distance $D_1$ corresponding to the velocity $v_1$. Then, the expected braking-to-stop distance corresponding to the initial velocity is obtained through an interpolation based on the initial velocity, the velocity $v_1$, the expected braking-to-stop distance $D_1$ corresponding to the velocity $v_1$, the velocity $v_2$, and the expected braking-to-stop distance $D_2$ corresponding to the velocity $v_2$.

In some optional embodiments, for each velocity value, a table entry of an expected braking-to-stop distance corresponding to the each velocity value may be preset, to help looking up, by a lookup table (LUT), expected braking-to-stop distances corresponding to the upper velocity limit and the lower velocity limit of the target velocity range to which the initial velocity belongs, that is, the above first expected braking-to-stop distance and second expected braking-to-stop distance. Optionally, a specific operation for the lookup table may be implemented by hardware to improve processing efficiency.

According to this embodiment of the present disclosure, expected braking-to-stop distances corresponding to different velocity values are preconfigured, so that, during parameter adjustment, an expected braking-to-stop distance corresponding to an actual initial velocity may be obtained through table lookup, an interpolation, and the like based on the initial velocity of the vehicle for braking, thereby providing an effective expected braking-to-stop distance for the parameter adjustment.

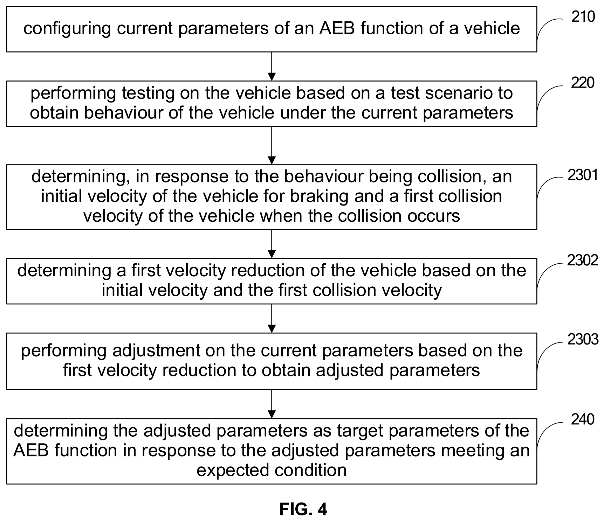

FIG. 4 is a schematic flowchart illustrating a parameter determination method for an AEB function according to still another exemplary embodiment of the present disclosure.

In some optional embodiments, based on any one of the above embodiments, as shown in FIG. 4, step 230 of performing adjustment on the current parameters based on the behaviour to obtain adjusted parameters may include: Step 2301: Determining, in response to the behaviour being collision, an initial velocity of the vehicle for braking and a first collision velocity of the vehicle when the collision occurs.

The collision means that collision occurs between the vehicle and the target obstacle, that is, the velocity of the vehicle when it contacts the target obstacle is greater than a preset value, where the preset value may be, for example, 0 or a value close to 0. For the initial velocity of the vehicle for braking, reference may be made to the above embodiment. The first collision velocity of the vehicle when the collision occurs refers to a velocity of the vehicle at a time when the vehicle collides with the target obstacle, that is, a velocity of the vehicle when a distance between the vehicle and the target obstacle becomes 0. Optionally, the first collision velocity may be obtained by monitoring the state of the vehicle during the test.

Step 2302: Determining a first velocity reduction of the vehicle based on the initial velocity and the first collision velocity.

The first velocity reduction (or referred to as a first velocity drop) refers to a velocity change of the vehicle from the initial velocity for braking to the first collision velocity at the collision time. That is, the first velocity reduction is a difference between the initial velocity and the first collision velocity. For example, a first velocity reduction $v_{delta}$ may be expressed as follows:

$$v_{delta} = v_{init} - v_{crash} \qquad \text{Formula (2)}$$

where $v_{init}$ represents the initial velocity of the vehicle for braking, and $v_{crash}$ represents the first collision velocity.

Step 2303: Performing adjustment on the current parameters based on the first velocity reduction to obtain the adjusted parameters.

The first velocity reduction may include different cases of zero (0) and non-zero (that is, not 0), where different cases represent different behaviours of the AEB function of the vehicle. For example, if the first velocity reduction is not 0, it indicates that the AEB function has issued a brake signal, but the braking capability is insufficient to stop the vehicle; and if the first velocity reduction is 0, it indicates that the AEB function has not issued a brake signal, or does not issue a brake signal because a collision risk fails to be assessed in a collision risk assessment stage, causing the AEB function not to enter a procedure of determining whether to issue a brake signal. Different cases may correspond to different adjustment manners. Therefore, the adjustment may be performed on the current parameters in a corresponding adjustment manner based on a specific case of the first velocity reduction to obtain adjusted parameters. For example, when the first velocity reduction is not 0, the braking capability is insufficient to stop the vehicle, essentially meaning that the braking-to-stop distance does not meet the requirement of the expected braking-to-stop distance, then the braking-to-stop distance may be adjusted by adjusting the first sub-parameter, so that the braking-to-stop distance of the vehicle may be closer to the requirement of the expected braking-to-stop distance, so as to successfully stop by braking the vehicle. For another example, when the first velocity reduction is 0, whether to issue a collision risk may be assessed based on the risk (that is, whether a collision risk exists is assessed), to adjust at least one of the first sub-parameter, the second sub-parameter, and the third sub-parameter.

According to this embodiment of the present disclosure, in a case that the behaviour of the vehicle is collision, the adjustment may be performed on the current parameters further based on the first velocity reduction from the braking time to the collision time of the vehicle. Because different first velocity reductions may represent behaviours of the AEB function in different stages such as collision risk assessment and latest issuing time assessment, a sub-parameter related to an actual behaviour in the current parameters may be adjusted based on a specific case of the first velocity reduction, so that the behaviour of the vehicle under the adjusted parameters may meet the expected condition.

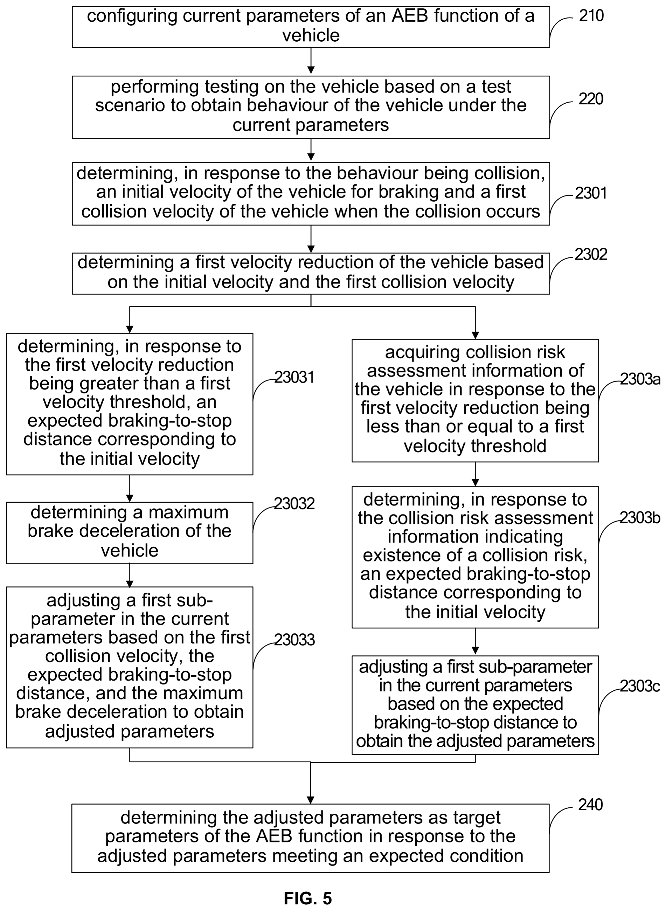

FIG. 5 is a schematic flowchart illustrating a parameter determination method for an AEB function according to yet another exemplary embodiment of the present disclosure.

In some optional embodiments, based on the above embodiment, as shown in FIG. 5, step 2303 of performing adjustment on the current parameters based on the first velocity reduction to obtain the adjusted parameters may include: Step 23031: Determining, in response to the first velocity reduction being greater than a first velocity threshold, an expected braking-to-stop distance corresponding to the initial velocity.

The first velocity threshold may be 0 or a value close to 0. If the first velocity reduction is greater than the first velocity threshold, it indicates that the AEB function has issued a brake signal, but the braking capability (that is, the deceleration) is insufficient to stop the vehicle. For a specific operation of determining an expected braking-to-stop distance corresponding to the initial velocity, reference may be made to the specific operation of step 2320 in the above embodiment, and details are not described herein again.

Step 23032: Determining a maximum brake deceleration of the vehicle.

The maximum brake deceleration may be obtained from the current parameters, that is, the second sub-parameter in the current parameters includes the maximum brake deceleration.

Step 23033: Adjusting a first sub-parameter in the current parameters based on the first collision velocity, the expected braking-to-stop distance, and the maximum brake deceleration to obtain the adjusted parameters.

In some optional embodiments, the first sub-parameter in the current parameters may be adjusted based on the first collision velocity, the expected braking-to-stop distance, and the maximum brake deceleration based on a pre-configured adjustment rule (which may be referred to as a first adjustment rule) to obtain the adjusted parameters.

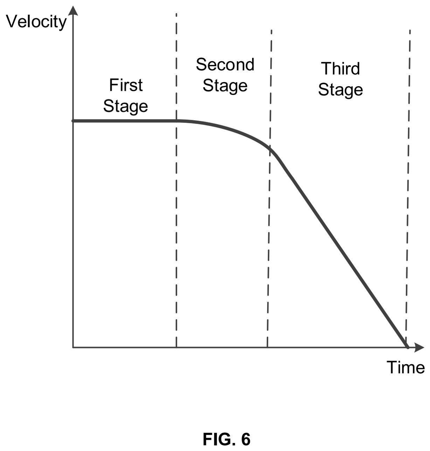

In some optional embodiments, the first adjustment rule may be set based on three stages of the brake in the deceleration process of the vehicle. FIG. 6 is a schematic diagram illustrating three stages of a brake according to an exemplary embodiment of the present disclosure. As shown in FIG. 6, the three stages of the brake (or referred to as an actuator) may include a first stage, a second stage, and a third stage.

The first stage is a brake response stage, or referred to as a brake response time. In this stage, the vehicle still maintains traveling at a constant velocity at the current velocity.

The second stage is a stage in which the brake responds to the maximum brake deceleration, or referred to as a time for the brake to respond to the maximum brake deceleration. In this stage, the deceleration of the vehicle continuously rises to the maximum brake deceleration, with the vehicle being undergoing variably decelerated motion. For example, the maximum brake deceleration is 10 m/s$^2$, or expressed as an acceleration of -10 m/s$^2$. For different brakes, there may be different performance characteristics, and reachable maximum brake decelerations may be different, not limited to 10 m/s$^2$.

The third stage is a stage in which the brake maintains the maximum brake deceleration until the vehicle stops. In this stage, the deceleration of the vehicle remains at the maximum brake deceleration, and the vehicle undergoes uniformly decelerated motion.

Based on the three stages of the brake, to prevent collision from occurring to the vehicle to be collided, the first sub-parameter further needs to be adjusted to adjust the latest issuing time, to advance the time at which the vehicle issues a brake signal, thereby avoiding the occurrence of the collision for the vehicle. In this case, assuming that no collision occurs to the vehicle, the vehicle continues to decelerate from the collision velocity to 0, where a theoretical traveling distance of the vehicle is $\frac{v_{crash}^2}{2 * a_{dec}}$, and the first adjustment is set based on the theoretical traveling distance and the expected braking-to-stop distance $\mathbf{dis_{exp}}$, that is, the adjusted first sub-parameter $\mathbf{sa_{offset}}$ may be expressed as follows:

$$sa_{offset} = \frac{v_{crash}^2}{2 * a_{dec}} + dis_{exp} \qquad \text{Formula (3)}$$

where $\mathbf{v_{crash}}$ represents a collision velocity at a time when the vehicle collides with the target obstacle, that is, the first collision velocity; $\mathbf{a_{dec}}$ represents the maximum brake deceleration; $\mathbf{a_{dec}}$ is a negative value; and $\mathbf{dis_{exp}}$ represents the expected braking-to-stop distance, that is, the expected braking-to-stop distance corresponding to the initial velocity. In the velocity-distance space, in the process in which the vehicle decelerates from the collision velocity to 0, the theoretical traveling distance of the vehicle is a negative value, $\mathbf{dis_{exp}}$ is a negative value, and thus, $\mathbf{sa_{offset}}$ is a negative value. The expected braking-to-stop distance and the theoretical traveling distance of the vehicle that continues to decelerate from the collision velocity to 0 are used together as reachable set distance offsets to adjust a timing for issuing a brake signal, thereby adjusting the braking-to-stop distance, that is, increasing the absolute value of the braking-to-stop distance, causing the braking-to-stop distance of the behaviour of the vehicle to be closer to the expected braking-to-stop distance.

According to this embodiment of the present disclosure, when the first velocity reduction is not 0, it indicates that the AEB function has issued a brake signal, but the braking capability is insufficient to stop the vehicle. In this case, the first sub-parameter is adjusted based on the maximum brake deceleration of the vehicle, the first collision velocity, and the expected braking-to-stop distance. Because the first sub-parameter can control the braking-to-stop distance of the vehicle, the adjusted first sub-parameter enables the vehicle to brake to stop before collision, and the braking-to-stop distance meets the requirement of the expected braking-to-stop distance. In this way, the vehicle can have an appropriate braking-to-stop distance while avoiding collision, thereby avoiding issuing of a brake signal too early or too late.

In some optional embodiments, step 23033 of adjusting a first sub-parameter in the current parameters based on the first collision velocity, the expected braking-to-stop distance, and the maximum brake deceleration to obtain the adjusted parameters may include:

determining a road environment coefficient based on a target road environment type corresponding to the test scenario; and adjusting the first sub-parameter in the current parameters under the target road environment type based on the first collision velocity, the expected braking-to-stop distance, the maximum brake deceleration, and the road environment coefficient to obtain the adjusted parameters.

Road environment types may involve a conventional standard road, a muddy road, a concrete road, and the like. A specific road environment type may be set based on an actual requirement, which is not limited in this embodiment of the present disclosure. The muddy road is, for example, a road having a road surface covered with snow or water. The concrete road is, for example, a road having a rough concrete road surface. Different road environment coefficients may be set for different road environment types. Then, a road environment coefficient corresponding to the test scenario may be determined based on a road environment type (that is, the target road environment type) corresponding to the test scenario. Then, the first sub-parameter in the current parameters under the target road environment type is adjusted based on the first collision velocity, the expected braking-to-stop distance, the maximum brake deceleration, and the road environment coefficient to obtain the adjusted parameters.

In some optional embodiments, the adjusted first sub-parameter $sa_{offset}$ may be expressed as follows:

$$sa_{offset} = (1 + \epsilon)\left( \frac{v_{crash}^2}{2 * a_{dec}} + dis_{exp}\right) \qquad \text{Formula (4)}$$

where ε denotes the road environment coefficient. For other symbols, refer to the above content. Similar to that in Formula (3), $sa_{offset}$ is a negative value.

In some optional embodiments, the current parameters may include first sub-parameters respectively corresponding to road environment types. The first sub-parameter in the current parameters under the target road environment type is adjusted based on a road environment coefficient corresponding to the test scenario. For example, a road environment coefficient corresponding to the conventional standard road may be a first preset coefficient, which is, for example, 0 or another value close to 0. A road environment coefficient corresponding to the muddy road may be a second preset coefficient, which may be, for example, a value within a specified range. The specified range may be, for example, a range of 0.1 to 0.3 or another range. A road environment coefficient corresponding to the concrete road may be a third preset coefficient, which may be a value within a specified range. The specified range may be, for example, a range of (-0.1) to (-0.3) or another range. A specific road environment type and a corresponding road environment coefficient may be set based on an actual requirement, which is not limited in this embodiment of the present disclosure.

In some optional embodiments, for first sub-parameters corresponding to different road environment types, tests may be performed respectively in test scenarios of the corresponding road environment types to implement the adjustment of the corresponding first sub-parameters.

According to this embodiment of the present disclosure, because there are different road surface adhesion conditions for the vehicle in different road environments, the adjustment of the first sub-parameter in the current parameters further in combination with the road environment coefficient may improve fitness between the braking-to-stop distance and the expected braking-to-stop distance of the vehicle in different road environments, enabling the vehicle to successfully stop by braking with an appropriate braking distance in different road environments, thereby both avoiding collision and avoiding an excessive braking-to-stop distance, that is, avoiding issuing of a brake signal too early.

In some optional embodiments, as shown in FIG. 5, step 2303 of performing adjustment on the current parameters based on the first velocity reduction to obtain the adjusted parameters may include:
Step 2303a: Acquiring collision risk assessment information of the vehicle in response to the first velocity reduction being less than or equal to a first velocity threshold.

The first velocity reduction being less than or equal to the first velocity threshold means that the first velocity reduction is substantially 0, that is, the AEB function issues no brake signal or issues a brake signal too late. Issuing a brake signal too late means, for example, a THW from a brake signal issuing time to a collision time is less than or equal to a brake response time, resulting in occurrence of collision before the brake executes a braking action. In this case, there are two reasons, one of which is that no collision risk (or risk for short) is issued in the collision risk assessment stage, causing the AEB function not to enter the stage of determining a latest issuing time, and thus no brake signal is issued; and the other of which is that a risk is issued in the collision risk assessment stage, but a latest braking time is not accurately determined in the stage of determining the latest issuing time, resulting in no brake signal being issued. Therefore, the collision risk assessment information of the vehicle may be acquired first to determine whether a risk has been issued in the collision risk assessment stage. If the collision risk assessment information indicates existence of a collision risk, it means that a collision risk has been issued in the collision risk assessment stage. If the collision risk assessment information indicates inexistence of a collision risk, it means that no collision risk has been issued in the collision risk assessment stage.

Step 2303b: Determining, in response to the collision risk assessment information indicating existence of a collision risk, an expected braking-to-stop distance corresponding to the initial velocity.

The collision risk assessment information indicating existence of a collision risk means that a collision risk has been issued in the collision risk assessment stage. In this case, the reason causing the first velocity reduction to be less than or equal to the first velocity threshold is that the latest braking time is not accurately assessed, that is, no brake signal has been issued when the vehicle collides with the target obstacle. For a specific operation of determining an expected braking-to-stop distance corresponding to the initial velocity, reference may be made to the above embodiment, and details are not described herein again.

Step 2303c: Adjusting a first sub-parameter in the current parameters based on the expected braking-to-stop distance to obtain the adjusted parameters.

The expected braking-to-stop distance $\textbf{dis}_{\textbf{exp}}$ may be used as the adjusted first sub-parameter $\textbf{sa}_{\textbf{offset}}$, and expressed as follows:

$$\textbf{sa}_{\textbf{offset}} = \textbf{dis}_{\textbf{exp}} \qquad \text{Formula (5)}$$

In Formula (5), in the velocity-distance space, $\textbf{dis}_{\textbf{exp}}$ is a negative value, and then $\textbf{sa}_{\textbf{offset}}$ is a negative value, to adjust the braking-to-stop distance of the behaviour of the vehicle, causing the braking-to-stop distance to be closer to the expected braking-to-stop distance.

According to this embodiment of the present disclosure, when a collision risk is normally issued in the collision risk assessment stage, if the AEB function issues no brake signal or issues a brake signal too late to cause collision, it indicates that the AEB function does not accurately determine a latest braking time. In this case, the first sub-parameter is adjusted based on the expected braking-to-stop distance, and the braking-to-stop distance of the vehicle is controlled by using the first sub-parameter, so that the braking-to-stop distance of the vehicle under the adjusted first sub-parameter can be closer to the expected braking-to-stop distance, thereby avoiding occurrence of collision.

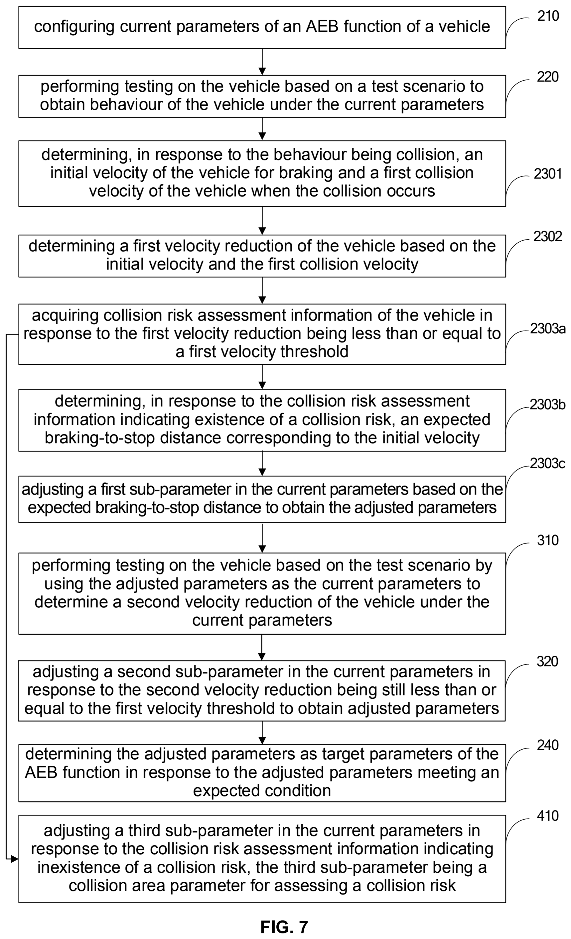

FIG. 7 is a schematic flowchart illustrating a parameter determination method for an AEB function according to still another exemplary embodiment of the present disclosure.

In some optional embodiments, as shown in FIG. 7, after step 2303c of adjusting a first sub-parameter in the current parameters based on the expected braking-to-stop distance to obtain the adjusted parameters, the method may further include:

Step 310: Performing testing on the vehicle based on the test scenario by using the adjusted parameters as the current parameters to determine a second velocity reduction of the vehicle under the current parameters.

The adjusted parameters may be used as current parameters, and the current parameters are configured into the AEB function of the vehicle. For example, the adjusted parameters may be used to overwrite (or replace) the current parameters in the AEB function, so that the adjusted parameters are used as current parameters. Then, the testing is again performed on the vehicle based on the test scenario to obtain a second velocity reduction of the vehicle under the current parameters. A specific operation of determining a second velocity reduction is similar to the above operation of determining a first velocity reduction, and details are not described herein again.

Step 320: Adjusting a second sub-parameter in the current parameters in response to the second velocity reduction being still less than or equal to the first velocity threshold to obtain adjusted parameters.

If the second velocity reduction is still less than or equal to the first velocity threshold, it indicates that the vehicle has not issued a brake signal or issues a brake signal too late, and it also indicates that the assessment of a latest braking time by the AEB function is still not accurate enough. In this case, the maximum brake deceleration may not be accurate enough. Therefore, the second sub-parameter in the current parameters may be adjusted, that is, the maximum brake deceleration is adjusted, to obtain the adjusted parameters.

In some optional embodiments, if the current parameters are initialized parameters, and the second sub-parameter is a default value, for example, $-10 \text{ m/s}^2$, the default value may not comply with an actual performance status of the vehicle. If the current parameters are parameters after the previous adjustment, the second sub-parameter may be a default value or a value after the previous adjustment. The second sub-parameter may be adjusted based on a preset stepsize (which may be referred to as a first preset stepsize or a first adjustment stepsize). The preset stepsize may be any stepsize. For example, the preset stepsize may be $0.5 \text{ m/s}^2$ or another value. For example, during the first adjustment, the second sub-parameter may be increased based on the default value $-10 \text{ m/s}^2$ according to the preset stepsize, that is, the adjusted parameter is $(-10+0.5) \text{ m/s}^2$. Subsequent adjustments are performed sequentially based on the previous adjusted parameter according to the preset stepsize. Optionally, to determine a maximum brake deceleration best adaptive for the brake, in addition to determining the adjusted parameters in a direction of increasing sequentially the second sub-parameter based on the default value, the adjusted parameters may also be determined in a direction of decreasing sequentially the second sub-parameter, for example, $(-10-0.5)$, until a maximum brake deceleration adaptive for actual performance of the brake is determined through a test. A specific adjustment direction is not limited.

In some optional embodiments, the second sub-parameter may include at least one of a maximum brake deceleration and a brake response time. For the brake response time, reference may be made to the first stage in the three stages of the brake. An initialized value of the brake response time is a default value, which is, for example, 200 ms (millisecond). During the adjustment of the brake response time in the second sub-parameter, the brake response time may be adjusted based on a preset stepsize (which may be referred to as a second preset stepsize or a second adjustment stepsize) corresponding to the brake response time. The preset stepsize corresponding to the brake response time may be, for example, 5 ms, 10 ms, or another value. For example, during the first adjustment, the brake response time may be increased sequentially or decreased sequentially according to the preset stepsize based on the default value of 200 ms. A brake response time adaptive for actual performance of the brake is determined by performing testing for behaviour of the vehicle under the adjusted brake response time. A specific adjustment direction is not limited. Optionally, in an adjustment process, at least one of the maximum brake deceleration and the brake response time in the second sub-parameter may be adjusted, which is not specifically limited. Specifically, the second sub-parameter may be adjusted based on respective adjustment stepsizes of the maximum brake deceleration and the brake response time to obtain an adjusted second sub-parameter, and the adjusted second sub-parameter is used as a second sub-parameter in the adjusted parameters.

According to this embodiment of the present disclosure, when a collision risk is normally issued in the collision risk assessment stage, but the AEB function fails to issue a brake signal or issues a brake signal too late and collision consequently occurs, if a velocity reduction (that is, the second velocity reduction) from a braking trigger time to a collision time after the adjustment of the first sub-parameter is still less than or equal to the first velocity threshold, the second sub-parameter is further adjusted to obtain adjusted parameters. Because the second sub-parameter is a brake performance parameter and includes at least one of the maximum brake deceleration and the brake response time, the adjustment of the second sub-parameter enables the adjusted brake performance parameter to better conform with an actual situation of the brake, avoiding or reducing a case in which the vehicle cannot brake to stop or the braking-to-stop distance does not meet the requirement of the expected braking-to-stop distance due to an inaccurate performance parameter.

In some optional embodiments, as shown in FIG. 7, the method of the embodiments of the present disclosure may further include:

Step 410: Adjusting a third sub-parameter in the current parameters in response to the collision risk assessment information indicating inexistence of a collision risk, the third sub-parameter being a collision area parameter for assessing a collision risk.

The collision area parameter refers to a relevant parameter of a collision area based on which the collision risk between the vehicle and the obstacle is determined. The collision area parameter may include a parameter for determining a boundary of the collision area. When the collision risk assessment information indicates inexistence of a collision risk but the vehicle collides with the target obstacle, it indicates that a collision risk fails to be issued in the collision risk assessment stage. The reason for this may be that the collision area parameter for assessing a collision risk is not accurate enough, thus failing to assess a collision risk. Referring to the above content, in the collision risk assessment process, a probability value, that is, a collision probability, that predicted trajectories of the ego vehicle and the target obstacle fall within the collision area needs to be assessed. If the probability value is less than a set threshold, no collision risk is to be issued. The probability value herein is an integral value of a collision indication vector, determined based on the first position probability distribution information and the second position probability distribution information of the ego vehicle, in the collision area. In a case of substantially stable trajectory prediction results of the ego vehicle and the target obstacle, the magnitude of the collision probability is mainly determined by the collision area. If a collision risk fails to be normally issued, it indicates that a size of the collision area herein may not meet an expected requirement. Therefore, the collision area parameter of the third sub-parameter may be adjusted, so that a collision area corresponding to the adjusted collision area parameter meets the expected requirement, thereby enabling the vehicle to normally issue a collision risk in the collision risk assessment stage.

In some optional embodiments, a lateral size and/or a longitudinal size of the collision area may be adjusted based on a preset stepsize (which may be referred to as a third preset stepsize or a third adjustment stepsize) corresponding to the collision area to obtain an adjusted third sub-parameter. The adjusted third sub-parameter is used as a third sub-parameter in the adjusted parameters. The third preset stepsize may be any stepsize. For example, the third preset stepsize may be 0.1 m, 0.2 m, or another value. After each adjustment, testing is typically performed again to obtain behaviour of the vehicle under adjusted parameters, and the parameters are iteratively adjusted based on the new behaviour in the above adjustment manners under different behaviours, until the adjusted parameters meet the expected condition.

In some optional embodiments, in the process of adjusting the lateral size and/or the longitudinal size of the collision area, there may be included three cases: increasing only the lateral size of the collision area, increasing only the longitudinal size of the collision area, and increasing both the lateral size and the longitudinal size of the collision area. For example, the lateral size of the collision area is increased by 0.1 m.

In some optional embodiments, collision areas in different road traffic scenarios may vary in type. For example, the road traffic scenarios may include a vehicle-following scenario, a crossing scenario, and a turning scenario. Collision areas corresponding to the vehicle-following scenario may include a vehicle-following collision area and a vehicle-following-and-overtaking collision area. Collision areas corresponding to the crossing scenario may include a crossing collision area and a crossing and lateral collision area. Collision areas corresponding to the turning scenario may include a left-turn collision area and a right-turn collision area. Different types of collision areas correspond to different collision area parameters. The collision area parameter is used for determining an actual collision area in a case of a corresponding type of collision area. The collision area parameter may include a parameter for determining area boundaries of the collision area. The area boundaries may include, for example, boundaries in four directions relative to surroundings of the ego vehicle. An initial collision area parameter may be set based on a vehicle size and an obstacle size. Whether the ego vehicle has an overtaking tendency may be determined based on a velocity of the vehicle relative to the target obstacle and a longitudinal distance between the target obstacle and the ego vehicle in a local coordinate system of the vehicle. For example, if the velocity of the ego vehicle relative to the obstacle is greater than zero, and the longitudinal distance between the ego vehicle and the obstacle is less than a distance threshold (for example, 5 m), it is determined that the ego vehicle has an overtaking tendency.

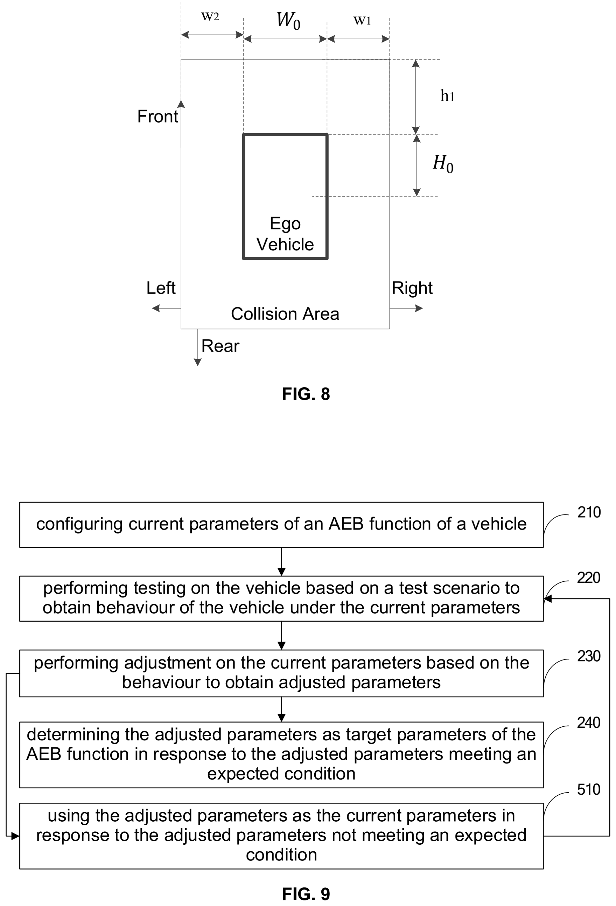

For example, FIG. 8 is a schematic diagram illustrating a collision area according to an exemplary embodiment of the present disclosure. As shown in FIG. 8, the collision area is a certain area around the ego vehicle, $W_0$ represents a width of the ego vehicle, and $H_0$ represents a half of a length of the ego vehicle. $w_1$, $w_2$, and $h_1$ represent parameters for determining area boundaries of the collision area. Different collision area types correspond to different parameters, which may be specifically determined based on features of the different collision area types. For example, a left-turn collision area has a larger $w_1$ and a smaller $w_2$, while a right-turn collision area has a smaller $w_1$ and a larger $w_2$. Optionally, $w_1$, $w_2$, and $h_1$ may be functions related to a size of an obstacle. For example, $w_1$ and $w_2$ may be functions related to a width of the obstacle, and $h_1$ may be a function related to a length of the obstacle. In an actual traveling process, a specific collision area may be determined based on a size of an obstacle, a collision area type, and $w_1$, $w_2$, and $h_1$ that correspond to the collision area type. Front, rear, left, and right in FIG. 8 refer to front, rear, left, and right sides relative to the ego vehicle.

In some optional embodiments, the testing may be performed for behaviour of the vehicle under collision area parameters of different collision area types by setting test scenarios for the different collision area types. Then, in a case of requiring collision area parameter adjustment, the collision area parameters corresponding to the collision area types are adjusted based on the behaviour according to the parameter adjustment process in each of the above embodiments.

According to this embodiment of the present disclosure, in a case that a collision risk cannot be normally issued in the collision risk assessment stage, the collision area parameter is adjusted so that the AEB function may normally issue a collision risk, thereby improving effectiveness of the collision area parameter.

FIG. 9 is a schematic flowchart illustrating a parameter determination method for an AEB function according to yet another exemplary embodiment of the present disclosure.

In some optional embodiments, based on any one of the above embodiments, as shown in FIG. 9, the method of the embodiments of the present disclosure may further include:

Step 510: Using the adjusted parameters as the current parameters in response to the adjusted parameters not meeting the expected condition, iteratively performing step 220 of performing testing on the vehicle based on a test scenario to obtain behaviour of the vehicle under the current parameters and subsequent steps, until the adjusted parameters meet the expected condition, and are determined as the target parameters of the AEB function.

According to this embodiment of the present disclosure, in a case that parameters obtained after one adjustment cannot meet the expected condition, the parameters of the AEB function are iteratively adjusted through performing testing a plurality of times so that the obtained adjusted parameters may meet the expected condition, thereby effectively obtaining the target parameters of the AEB function.

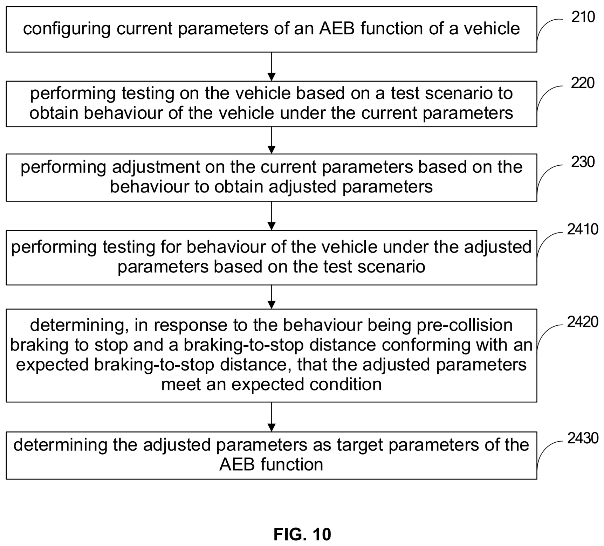

FIG. 10 is a schematic flowchart illustrating a parameter determination method for an AEB function according to still another exemplary embodiment of the present disclosure.

In some optional embodiments, based on any one of the above embodiments, as shown in FIG. 10, step 240 of determining the adjusted parameters as target parameters of the AEB function in response to the adjusted parameters meeting an expected condition may include:

Step 2410: Performing testing for behaviour of the vehicle under the adjusted parameters based on the test scenario.

The adjusted parameters may be configured into the AEB function, and then the testing is performed for behaviour of the vehicle under the adjusted parameters based on the test scenario. For a specific operation, reference may be made to step 220 in the above embodiment, and details are not described herein again.

Step 2420: Determining, in response to the behaviour being pre-collision braking to stop and a braking-to-stop distance conforming with the expected braking-to-stop distance, that the adjusted parameters meet the expected condition.

The braking-to-stop distance conforming with the expected braking-to-stop distance may mean that a difference (that is, a deviation) between the braking-to-stop distance and the expected braking-to-stop distance is less than a deviation threshold, that is, the braking-to-stop distance is close to the expected braking-to-stop distance, which may avoid both occurrence of collision and triggering of emergency braking too early.

Step 2430: Determining the adjusted parameters as the target parameters of the AEB function.

According to this embodiment of the present disclosure, after obtaining the adjusted parameters, testing for behaviour of the vehicle under the adjusted parameters is performed again to determine whether the adjusted parameters meet the expected condition, thereby ensuring effectiveness of the target parameters.

In some optional embodiments, under the current parameters, the AEB function of the vehicle may include steps: determining a collision risk (that is, collision risk assessment information) between the vehicle and at least one obstacle; determining a first sub-parameter based on the current parameters in response to a collision risk between the vehicle and a target obstacle in the at least one obstacle indicating that a collision risk exists between the vehicle and the target obstacle at a future time, the first sub-parameter being a reachable set distance offset; determining initial parameters of a target subset for which the vehicle collides with the target obstacle; determining, based on the initial parameters of the target subset and a reachable set distance offset, a target subset of a velocity-distance space in which the vehicle collides with the target obstacle; generating a reachable set based on the target subset, a second sub-parameter in the current parameters, and a preconfigured backward deduction state transition rule, the second sub-parameter being backward deduction acceleration in the backward deduction state transition rule, and the backward deduction acceleration being a maximum brake deceleration of the vehicle; based on current vehicle state information of the vehicle, predicting velocity and distance distribution information (that is, two-dimensional probability distribution information) of the vehicle at at least one future time; determining a issuing state of a brake signal (or referred to as a trigger state of an emergency braking function) based on velocity and distance distribution information of the vehicle at each future time and the reachable set; issuing the brake signal in response to the issuing state being issuing; and controlling the vehicle to brake based on the brake signal.

In some optional embodiments, the determining a collision risk between the vehicle and at least one obstacle may include:

for any obstacle, determining a collision area based on a third sub-parameter in the current parameters, the third sub-parameter being a collision area parameter; and determining a collision risk between the vehicle and the obstacle based on the current vehicle state information of the vehicle, current obstacle state information of the obstacle, and the collision area. For a specific operation of determining a collision risk, reference may be made to the above content.

In some optional embodiments, the initial parameters of the target subset may include the above velocity range (for example, 0 to $V_{max}$) and distance range (for example, 0 to $d_{max}$). The target subset is determined based on a rectangular area (that is, a target reachable area) defined by four target corner points (0+ $\mathbf{sa_{offset}}$, 0), $\mathbf{(0+sa_{offset}}, V_{max})$, ($d_{max}$+$sa_{offset}$, 0), and $\mathbf{(d_{max}+sa_{offset}}, V_{max})$. $\mathbf{sa_{offset}}$ may represent the first sub-parameter in the current parameters. The backward deduction state transition rule may be determined based on a preset motion model, which may be a uniformly accelerated motion model, a uniform motion model, or a non-uniform motion model with variable acceleration and is not specifically limited. Using a uniformly accelerated motion model as an example, a forward state transition process may be expressed as follows:

$$\mathbf{d_{k+1}} = \mathbf{d_k} + \mathbf{v_k}\Delta\mathbf{T} + \tfrac{1}{2}\mathbf{a_k}\Delta\mathbf{T}^2 \qquad \text{Formula (6)}$$

$$\mathbf{v_{k+1}} = \mathbf{v_k} + \mathbf{a_k}\Delta\mathbf{T} \qquad \text{Formula (7)}$$

In Formulas (6) and (7), $\mathbf{d_{k+1}}$ denotes a distance from the vehicle to a collision point at a time k+1, $\mathbf{d_k}$ denotes a distance from the vehicle to the collision point at a time k, $\Delta\mathbf{T}$ denotes a deduction time step, $\mathbf{v_{k+1}}$ denotes a velocity of the vehicle at the time k+1, $\mathbf{v_k}$ denotes a velocity of the vehicle at the time k, and $\mathbf{a_k}$ denotes acceleration, that is, the maximum brake deceleration, also, a maximum brake deceleration included in the second sub-parameter, where for example, $\mathbf{a_k}$ is -10 m/s$^2$.

Based on the above forward state transition process, the backward deduction state transition rule may be determined and expressed as follows:

$$\mathbf{v_k} = \mathbf{v_{k+1}} - \mathbf{a_k}\Delta\mathbf{T} \qquad \text{Formula (8)}$$

$$\mathbf{d_k} = \mathbf{d_{k+1}} - \mathbf{v_k}\Delta\mathbf{T} - \tfrac{1}{2}\mathbf{a_k}\Delta\mathbf{T}^2 = \mathbf{d_{k+1}} - (\mathbf{v_{k+1}} - \mathbf{a_k}\Delta\mathbf{T})\Delta\mathbf{T} - \tfrac{1}{2}\mathbf{a_k}\Delta\mathbf{T}^2 \qquad \text{Formula (9)}$$

The symbols in Formulas (8) and (9) have the same meanings as those in Formulas (6) and (7).

For example, $\Delta\mathbf{T}$ is 0.04s, and total deduction duration is 2s. Based on the four target corner points of the target subset and the above formulas (8) and (9), backward deduction is performed to obtain four backward deduction corner points of the four target corner points at each time. For four backward deduction corner points at any time, a reachable subset at the time is obtained. Reachable subsets respectively corresponding to 50 times may be obtained in total. These reachable subsets constitute the reachable set in the velocity-distance space.

The collision point is an intersection of a predicted future trajectory of the ego vehicle and a predicted future trajectory of the target obstacle. The future trajectory of the ego vehicle may be obtained through prediction based on a current vehicle state of the ego vehicle and a preset kinematic model. The future trajectory of the target obstacle may be obtained through prediction based on a current obstacle state of the target obstacle and a preset kinematic model. The kinematic model may be, for example, a uniform motion model or a uniformly accelerated motion model, which is not specifically limited. Optionally, the future trajectory of the ego vehicle and the future trajectory of the target obstacle may be obtained through prediction by using a trajectory prediction model. For the velocity and distance distribution information of the vehicle at at least one future time, reference may be made to the above embodiment.

In some optional embodiments, the determining a issuing state of a brake signal based on velocity and distance distribution information of the vehicle at each future time and the reachable set may include:

determining, for each future time, based on velocity and distance distribution information of the vehicle at the future time, an integral value, of a state distribution (that is, a two-dimensional probability distribution ellipse or a two-dimensional probability distribution function) corresponding to the distribution information, within a reachable area corresponding to at least one reachable subset of the reachable set; and then, determining the issuing state of the brake signal based on the integral value corresponding to each future time. For details, reference may be made to the above content.

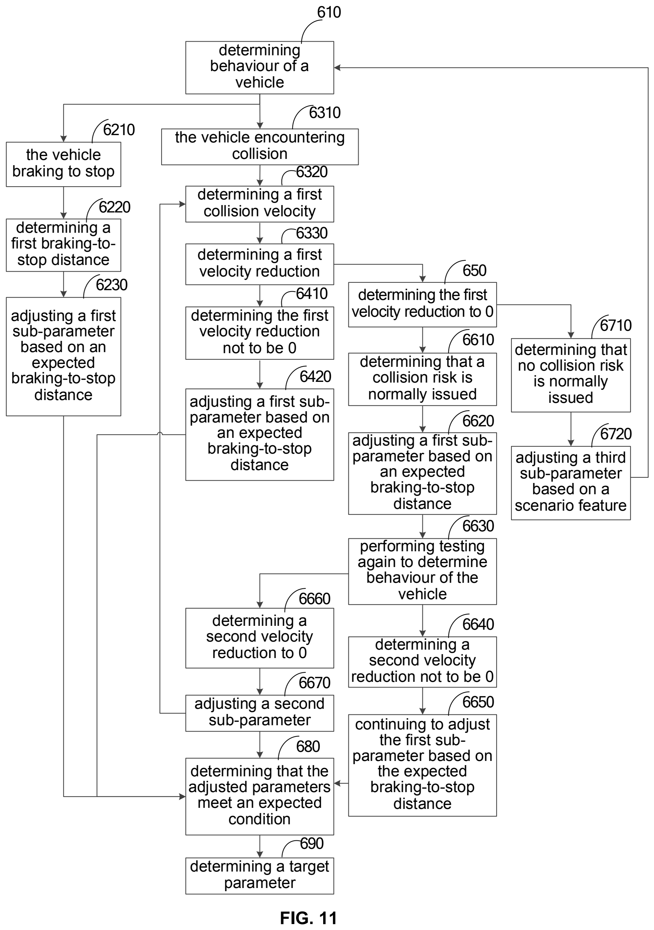

In some optional embodiments, FIG. 11 is a block diagram illustrating a procedure of a parameter determination method for an AEB function according to an exemplary embodiment of the present disclosure; As shown in FIG. 11, the method of this embodiment of the present disclosure may include steps:

Step 610: Determining behaviour of a vehicle, that is, performing testing on the vehicle based on a test scenario to obtain behaviour of the vehicle under current parameters, and then proceeding to step 6210 or step 6310.

Step 6210: The vehicle braking to stop, that is, determining that the behaviour of the vehicle is pre-collision braking to stop, and then proceeding to step 6220.

Step 6220: Determining a first braking-to-stop distance.

Step 6230: Adjusting a first sub-parameter based on an expected braking-to-stop distance, referring to the specific operation of step 2330, and then proceeding to step 680.

Step 6310: The vehicle encountering collision, that is, determining that the behaviour of the vehicle is collision, and then proceeding to step 6320.

Step 6320: Determining a first collision velocity, referring to the specific operation of step 2301.

Step 6330: Determining a first velocity reduction, referring to the specific operation of step 2302, and then proceeding to step 6410 or 650.

Step 6410: Determining the first velocity reduction not to be 0, that is, determining the first velocity reduction to be greater than a first velocity threshold.

Step 6420: Adjusting a first sub-parameter based on an expected braking-to-stop distance, referring to the specific operation of step 23033, and then proceeding to step 680.

Step 650: Determining the first velocity reduction to 0, that is, determining that the first velocity reduction is less than or equal to a first velocity threshold, and then proceeding to step 6610 or step 6710.

Step 6610: Determining that a collision risk is normally issued, that is, determining that collision risk assessment information indicates existence of a collision risk.

Step 6620: Adjusting a first sub-parameter based on an expected braking-to-stop distance, referring to the specific operation of step 2303c.

Step 6630: Performing testing again to determine behaviour of the vehicle, referring to the specific operation of step 310, and then proceeding to step 6640 or step 6660.

Step 6640: Determining a second velocity reduction not to be 0, that is, determining that the second velocity reduction is greater than the first velocity threshold.

Step 6650: Adjusting the first sub-parameter based on the expected braking-to-stop distance, referring to the specific operation of step 23033, and then proceeding to step 680.

Step 6660: Determining a second velocity reduction to 0, that is, determining that the second velocity reduction is still less than or equal to the first velocity threshold.

Step 6670: Adjusting a second sub-parameter, referring to the specific operation of step 320, and then proceeding to step 680.

Step 6710: Determining that no collision risk is normally issued, that is, determining that collision risk assessment information indicates inexistence of a collision risk.

Step 6720: Adjusting a third sub-parameter based on a scenario feature, referring to the specific operation of step 410.

After the third sub-parameter is adjusted, returning to step 610 to perform testing again to determine behaviour of the vehicle.

Step 680: Determining that the adjusted parameters meet an expected condition.

Step 690: Determining a target parameter, that is, determining the adjusted parameter that meets the expected condition as a target parameter.

According to the parameter determination method for an AEB function provided in this embodiment of the present disclosure, parameters of the entire AEB function are adjusted through behaviour of a vehicle in a test scenario based on an overall framework of the probabilistic AEB function, to obtain target parameters adaptive for a vehicle type of the vehicle, performance of a sensor, and performance of a brake, thereby implementing a closed-loop parameter calibration process. In this way, the vehicle is enabled to implement issuing of a brake signal conforming with an expected braking-to-stop distance under the target parameters, which may avoid both occurrence of collision between the vehicle and an obstacle and premature issuing of the brake signal, so that a perceived consistency deviation of the AEB function, as well as a tolerance capability and generalization of the performance of the brake, may be increased, thereby helping accelerate an implementation process of the probabilistic AEB function in a real vehicle. In addition, according to some embodiments of the present disclosure, the behaviour of the vehicle such as pre-collision braking to stop and collision and the related various parameters such as the braking-to-stop distance, the initial velocity of the vehicle for braking, the collision velocity of the vehicle and the like may also be referred to as performances of the vehicle.

In the technical solutions of the present disclosure, collection, storage, use, processing, transmission, provision, and disclosure of user personal information are in compliance with relevant laws and regulations and do not violate public order and good morals. In addition, the collection and use of user personal information involved in the technical solutions of the present disclosure are all conducted with knowledge and authorization of users, and do not involve unlawful collection or illegal use of user personal information.

The embodiments of the present disclosure described above may be implemented separately, or in any combination without conflict, and may be specifically set based on an actual requirement, which is not limited in the present disclosure.

Any one of the methods for determining parameters of an AEB function provided in the embodiments of the present disclosure may be performed by any suitable electronic device with a data processing capability, including but not limited to a terminal device, a server, and other electronic devices. Alternatively, any one of the methods for determining parameters of an AEB function provided in the embodiments of the present disclosure may be performed by a processor. For example, the processor performs, by calling a corresponding instruction stored in a memory, any one of the methods for determining parameters of an AEB function mentioned in the embodiments of the present disclosure. This is not repeated below.

Exemplary Apparatus

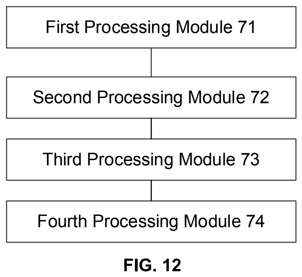

FIG. 12 is a schematic diagram illustrating a structure of a parameter determination apparatus for an AEB function according to an exemplary embodiment of the present disclosure. The apparatus of this embodiment may be used for implementing the corresponding method embodiment of the present disclosure. The apparatus shown in FIG. 12 may include a first processing module 71, a second processing module 72, a third processing module 73, and a fourth processing module 74.

The first processing module 71 is configured for configuring current parameters of the AEB function of a vehicle.

The second processing module 72 is configured for performing testing on the vehicle based on a test scenario to obtain behaviour of the vehicle under the current parameters, the behaviour being one of pre-collision braking to stop and collision.

The third processing module 73 is configured for performing adjustment on the current parameters based on the behaviour to obtain adjusted parameters.

The fourth processing module 74 is configured for determining the adjusted parameters as target parameters of the AEB function in response to the adjusted parameters meeting an expected condition.

In some optional embodiments, the AEB function issues a brake signal based on a reachable set; a first sub-parameter is a reachable set distance offset; a second sub-parameter is a maximum brake deceleration of the vehicle; and a third sub-parameter is a collision area parameter for assessing a collision risk.

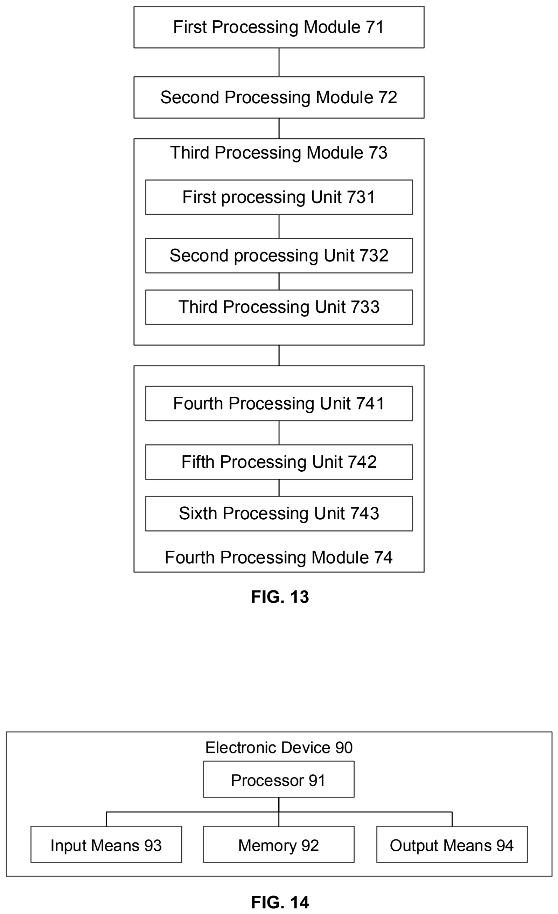

FIG. 13 is a schematic diagram illustrating a structure of a parameter determination apparatus for an AEB function according to another exemplary embodiment of the present disclosure.

In some optional embodiments, based on the embodiment shown in FIG. 12, as shown in FIG. 13, the third processing module 73 may include a first processing unit 731, a second processing unit 732, and a third processing unit 733.

The first processing unit 731 is configured for determining, in response to the behaviour being pre-collision braking to stop, a first braking-to-stop distance between a braking-to-stop position of the vehicle and a target obstacle.

The second processing unit 732 is configured for determining an expected braking-to-stop distance corresponding to an initial velocity of the vehicle for braking.

The third processing unit 733 is configured for adjusting a first sub-parameter in the current parameters based on the first braking-to-stop distance and the expected braking-to-stop distance to obtain the adjusted parameters.

In some optional embodiments, the second processing unit 732 is specifically configured for:

determining an upper velocity limit and a lower velocity limit of a target velocity range to which the initial velocity belongs; and performing interpolation based on a preconfigured first expected braking-to-stop distance corresponding to the upper velocity limit and a preconfigured second expected braking-to-stop distance corresponding to the lower velocity limit to obtain the expected braking-to-stop distance corresponding to the initial velocity.

In some optional embodiments, based on any one of the above embodiments, as shown in FIG. 13, the third processing module 73 may include a first processing unit 731, a second processing unit 732, and a third processing unit 733.

The first processing unit 731 is configured for determining, in response to the behaviour being collision, an initial velocity of the vehicle for braking and a first collision velocity of the vehicle when the collision occurs.

The second processing unit 732 is configured for determining a first velocity reduction of the vehicle based on the initial velocity and the first collision velocity.

The third processing unit 733 is configured for performing adjustment on the current parameters based on the first velocity reduction to obtain the adjusted parameters.

In some optional embodiments, based on the above embodiment, the third processing unit 733 is specifically configured for:

determining, in response to the first velocity reduction being greater than a first velocity threshold, an expected braking-to-stop distance corresponding to the initial velocity; determining a maximum brake deceleration of the vehicle; and adjusting a first sub-parameter in the current parameters based on the first collision velocity, the expected braking-to-stop distance, and the maximum brake deceleration to obtain the adjusted parameters.

In some optional embodiments, the third processing unit 733 is specifically configured for:

determining a road environment coefficient based on a target road environment type corresponding to the test scenario; and adjusting the first sub-parameter in the current parameters under the target road environment type based on the first collision velocity, the expected braking-to-stop distance, the maximum brake deceleration, and the road environment coefficient to obtain the adjusted parameters.

In some optional embodiments, the third processing unit 733 is specifically configured for:

acquiring collision risk assessment information of the vehicle in response to the first velocity reduction being less than or equal to a first velocity threshold; determining, in response to the collision risk assessment information indicating existence of a collision risk, an expected braking-to-stop distance corresponding to the initial velocity; and adjusting the first sub-parameter based on the expected braking-to-stop distance to obtain the adjusted parameters.

In some optional embodiments, the third processing unit 733 is further configured for: after adjusting the first sub-parameter based on the expected braking-to-stop distance to obtain the adjusted parameters, performing testing on the vehicle based on the test scenario by using the adjusted parameters as the current parameters to determine a second velocity reduction of the vehicle under the current parameters; and adjusting a second sub-parameter in the current parameters in response to the second velocity reduction being still less than or equal to the first velocity threshold to obtain adjusted parameters.

In some optional embodiments, the third processing unit 733 is further configured for:

adjusting a third sub-parameter in the current parameters in response to the collision risk assessment information indicating inexistence of a collision risk, the third sub-parameter being a collision area parameter for assessing a collision risk.

In some optional embodiments, based on any one of the above embodiments, the fourth processing module 74 is further configured for using the adjusted parameters as the current parameters in response to the adjusted parameters not meeting the expected condition. The second processing module 72 is further configured for performing testing on the vehicle based on the test scenario to obtain behaviour of the vehicle under the current parameters. The third processing module 73 is further configured for performing adjustment on the current parameters based on the behaviour to obtain adjusted parameters. The fourth processing module 74 is further configured for determining the adjusted parameters as target parameters of the AEB function in response to the adjusted parameters meeting the expected condition. The method of the embodiments of the present disclosure is implemented through interaction and iterative execution of respective functions by the first processing module 71, the second processing module 72, the third processing module 73, and the fourth processing module 74.

In some optional embodiments, based on any one of the above embodiments, as shown in FIG. 13, the fourth processing module 74 may include a fourth processing unit 741, a fifth processing unit 742, and a sixth processing unit 743.

The fourth processing unit 741 is configured for performing testing for behaviour of the vehicle under the adjusted parameters based on the test scenario.

The fifth processing unit 742 is configured for determining, in response to the behaviour being pre-collision braking to stop and a braking-to-stop distance conforming with the expected braking-to-stop distance, that the adjusted parameters meet the expected condition.

The sixth processing unit 743 is configured for determining the adjusted parameters as the target parameters of the AEB function.

The embodiments of the present disclosure described above may be implemented separately, or in any combination without conflict, and may be specifically set based on an actual requirement, which is not limited in the present disclosure.

For beneficial technical effects corresponding to the exemplary embodiment of this apparatus, refer to the corresponding beneficial technical effects of the exemplary method section described above, which are not repeated herein.

Exemplary Electronic Device

FIG. 14 is a diagram illustrating a structure of an electronic device according to an embodiment of the present disclosure. The electronic device includes at least one processor 91 and a memory 92.

The processor 91 may be a central processing unit (CPU) or another form of processing unit having a data processing capability and/or an instruction execution capability, and may control another component in the electronic device 90 to perform a desired function.

The memory 92 may include one or more computer program products. The computer program product may include various forms of computer readable storage media, such as a volatile memory and/or a non-volatile memory. The volatile memory may include, for example, a random access memory (RAM) and/or a cache. The non-volatile memory may include, for example, a read-only memory (ROM), a hard disk, or a flash memory. The computer readable storage medium may store one or more computer program instructions. The processor 91 may run the one or more computer program instructions to implement the method and/or other desired functions in the foregoing embodiments of the present disclosure.

In an example, the electronic device 90 may further include an input means 93 and an output means 94. The components are interconnected through a bus system and/or other forms of connection mechanisms (not shown).

The input means 93 may further include, for example, a touchscreen, a microphone, or various sensors. The sensors may include, for example, an image sensor (such as a camera or a video camera), lidar, millimeter-wave radar, ultrasonic radar, a positioning sensor, a pressure sensor, an air quality sensor, and a temperature sensor. The image sensor, lidar, millimeter-wave radar, ultrasonic radar, and the like may be configured for perceiving a surrounding environment, that is, detecting dynamic and static objects in the surrounding environment. The dynamic and static objects may include, for example, static objects such as lane lines, roadsides, arrows, signs, trees, and buildings, and dynamic objects such as surrounding vehicles, pedestrians, and cyclists. The positioning sensor is configured for locating a mobile device (such as an ego vehicle or a robot) on which the electronic device is located. The positioning sensor may include, for example, an inertial measurement unit (IMU) or a global positioning system (GPS). The pressure sensor is configured for detecting seat pressure. The temperature sensor may be configured for detecting a temperature inside a cockpit of a vehicle. The air quality sensor may be configured for detecting quality of air inside a cockpit of a vehicle.

The output means 94 may output various information to the outside, and may include, for example, a display, a loudspeaker, and a communication network and a remote output means connected thereto.

Certainly, for simplicity, only some components in the electronic device 90 that are related to the present disclosure are shown in FIG. 14, and components such as a bus and an input/output interface are omitted. Besides, the electronic device 90 may further include any other appropriate components depending on specific applications.

Exemplary Computer Program Product And Computer Readable Storage Medium

In addition to the above method and device, the embodiments of the present disclosure may also provide a computer program product including computer program instructions that, when run by a processor, cause the processor to perform the steps of the method according to the embodiments of the present disclosure that is described in the "exemplary method" section.

The computer program product may be program code, written with one or any combination of a plurality of programming languages, which is configured for performing the operations in the embodiments of the present disclosure. The programming languages include an object-oriented programming language such as Java or C++, and further include a conventional procedural programming language such as a "C" language or a similar programming language. The program code may be entirely or partially executed on a user computing device, executed as an independent software package, partially executed on the user computing device and partially executed on a remote computing device, or entirely executed on the remote computing device or a server.

In addition, the embodiments of the present disclosure may further relate to a computer readable storage medium, on which computer program instructions are stored. The computer program instructions, when run by a processor, cause the processor to perform the steps of the method according to the embodiments of the present disclosure that is described in the "exemplary method" section.

The computer readable storage medium may be one readable medium or any combination of a plurality of readable media. The readable medium may be a readable signal medium or a readable storage medium. The readable storage medium includes, for example, but is not limited to electrical, magnetic, optical, electromagnetic, infrared, or semiconductor systems, apparatuses, or devices, or any combination of the above. More specific examples (a non-exhaustive list) of the readable storage medium include: an electrical connection with one or more conducting wires, a portable disk, a hard disk, a RAM, a ROM, an erasable programmable ROM (an EPROM or a flash memory), an optical fiber, a portable compact disk ROM (CD-ROM), an optical storage device, a magnetic storage device, or any suitable combination of the above.

Basic principles of the present disclosure are described above in combination with specific embodiments. However, the advantages, superiorities, effects, and the like mentioned in the present disclosure are merely examples rather than limitations, and it should not be considered that these advantages, superiorities, effects, and the like are necessary for each of the embodiment of the present disclosure. In addition, specific details disclosed above are merely for examples and for ease of understanding, rather than limitations. The details described above do not limit that the present disclosure must be implemented by using the foregoing specific details.

A person skilled in the art may make various modifications and variations to the present disclosure without departing from the spirit and scope of this application. The present disclosure is intended to cover these modifications and variations provided that they fall within the scope of protection defined by the claims of the present disclosure or equivalents thereof.

**Claims**

1. A parameter determination method for an automatic emergency braking (AEB) function, **characterized by** comprising:

    configuring (210) current parameters of the AEB function of a vehicle;
    performing (220) testing on the vehicle based on a test scenario to obtain behaviour of the vehicle under the current parameters, the behaviour being one of pre-collision braking to stop and collision;
    performing (230) adjustment on the current parameters based on the behaviour to obtain adjusted parameters; and
    determining (240) the adjusted parameters as target parameters of the AEB function in response to the adjusted parameters meeting an expected condition.

2. The method according to claim 1, wherein the performing (230) adjustment on the current parameters based on the behaviour to obtain adjusted parameters comprises:

    determining (2310), in response to the behaviour being pre-collision braking to stop, a first braking-to-stop distance between a braking-to-stop position of the vehicle and a target obstacle;
    determining (2320) an expected braking-to-stop distance corresponding to an initial velocity of the vehicle for braking; and
    adjusting (2330) a first sub-parameter in the current parameters based on the first braking-to-stop distance and the expected braking-to-stop distance to obtain the adjusted parameters.

3. The method according to claim 2, wherein the determining (2320) an expected braking-to-stop distance corresponding to an initial velocity of the vehicle for braking comprises:

    determining an upper velocity limit and a lower velocity limit of a target velocity range to which the initial velocity belongs; and
    performing interpolation based on a preconfigured first expected braking-to-stop distance corresponding to the upper velocity limit and a preconfigured second expected braking-to-stop distance corresponding to the lower velocity limit to obtain the expected braking-to-stop distance corresponding to the initial velocity.

4. The method according to claim 1, wherein the performing (230) adjustment on the current parameters based on the behaviour to obtain adjusted parameters comprises:

    determining (2301), in response to the behaviour being collision, an initial velocity of the vehicle for braking and a first collision velocity of the vehicle when the collision occurs;
    determining (2302) a first velocity reduction of the vehicle based on the initial velocity and the first collision velocity; and
    performing (2303) adjustment on the current parameters based on the first velocity reduction to obtain the adjusted parameters.

5. The method according to claim 4, wherein the performing (2303) adjustment on the current parameters based on the first velocity reduction to obtain the adjusted parameters comprises:

    determining (23031), in response to the first velocity reduction being greater than a first velocity threshold, an expected braking-to-stop distance corresponding to the initial velocity;
    determining (23032) a maximum brake deceleration of the vehicle; and
    adjusting (23033) a first sub-parameter in the current parameters based on the first collision velocity, the expected braking-to-stop distance, and the maximum brake deceleration to obtain the adjusted parameters.

6. The method according to claim 5, wherein the adjusting (23033) a first sub-parameter in the current parameters based on the first collision velocity, the expected braking-to-stop distance, and the maximum brake deceleration to obtain the adjusted parameters comprises:

    determining a road environment coefficient based on a target road environment type corresponding to the test scenario; and
    adjusting the first sub-parameter **in** the current parameters under the target road environment type based on the first collision velocity, the expected braking-to-stop distance, the maximum brake deceleration, and the road environment coefficient to obtain the adjusted parameters.

7. The method according to claim 4, wherein the performing (2303) adjustment on the current parameters based on the first velocity reduction to obtain the adjusted parameters comprises:

    acquiring (2303a) collision risk assessment information of the vehicle in response to the first velocity reduction being less than or equal to a first velocity threshold;
    determining (2303b), **in** response to the collision risk assessment information indicating existence of a collision risk, an expected braking-to-stop distance corresponding to the initial velocity; and
    adjusting (2303c) a first sub-parameter **in** the current parameters based on the expected braking-to-stop distance to obtain the adjusted parameters.

8. The method according to claim 7, wherein after the adjusting a first sub-parameter in the current parameters based on the expected braking-to-stop distance to obtain the adjusted parameters, the method further comprises:

    performing (310) testing on the vehicle based on the test scenario by using the adjusted parameters as the current parameters to determine a second velocity reduction of the vehicle under the current parameters; and
    adjusting (320) a second sub-parameter in the current parameters in response to the second velocity reduction being still less than or equal to the first velocity threshold to obtain adjusted parameters.

9. The method according to claim 7, further comprising:
adjusting (410) a third sub-parameter in the current parameters in response to the collision risk assessment information indicating inexistence of a collision risk, the third sub-parameter being a collision area parameter for assessing a collision risk.

10. The method according to any one of claims 1 to 9, further comprising:
using the adjusted parameters as the current parameters in response to the adjusted parameters not meeting the expected condition, iteratively performing the performing (220) testing on the vehicle based on a test scenario to obtain behaviour of the vehicle under the current parameters, and performing (230) adjustment on the current parameters based on the behaviour to obtain adjusted parameters.

11. The method according to any one of claims 1 to 9, wherein the determining (240) the adjusted parameters as target parameters of the AEB function in response to the adjusted parameters meeting an expected condition comprises:

performing (2410) testing for behaviour of the vehicle under the adjusted parameters based on the test scenario;
determining (2420), in response to the behaviour being pre-collision braking to stop and a braking-to-stop distance conforming with the expected braking-to-stop distance, that the adjusted parameters meet the expected condition; and
determining (2430) the adjusted parameters as the target parameters of the AEB function.

12. The method according to any one of claims 2, 3, 5 to 8, wherein a brake signal is issued the AEB function based on a reachable set; and
the first sub-parameter is a reachable set distance offset.

13. A parameter determination apparatus for an automatic emergency braking (AEB) function, comprising:

a first processing module (71), configured for configuring current parameters of the AEB function of a vehicle;
a second processing module (72), configured for performing testing on the vehicle based on a test scenario to obtain behaviour of the vehicle under the current parameters, the behaviour being one of pre-collision braking to stop and collision;
a third processing module (73), configured for performing adjustment on the current parameters based on the behaviour to obtain adjusted parameters; and
a fourth processing module (74), configured for determining the adjusted parameters as target parameters of the AEB function **in** response to the adjusted parameters meeting an expected condition.

14. A non-transitory computer readable storage medium, on which a computer program is stored, **characterized by** that the computer program, when executed by a processor, causes the processor to implement the method according to any one of claims 1 to 12.

15. An electronic device (90), **characterized by** comprising:

a processor (91); and
a memory (92), configured for storing instructions executable by the processor (91), wherein
the processor (91) is configured for reading the executable instructions from the memory (92), and executing the instructions to implement the method according to any one of claims 1 to 12.

Test Scenario

**FIG. 1**

| configuring current parameters of an AEB function of a vehicle | 210 |

| performing testing on the vehicle based on a test scenario to obtain behaviour of the vehicle under the current parameters | 220 |

| performing adjustment on the current parameters based on the behaviour to obtain adjusted parameters | 230 |

| determining the adjusted parameters as target parameters of the AEB function in response to the adjusted parameters meeting an expected condition | 240 |

**FIG. 2**

configuring current parameters of an AEB function of a vehicle — 210

performing testing on the vehicle based on a test scenario to obtain behaviour of the vehicle under the current parameters — 220

determining, in response to the behaviour being pre-collision braking to stop, a first braking-to-stop distance between a braking-to-stop position of the vehicle and a target obstacle — 2310

determining an expected braking-to-stop distance corresponding to an initial velocity of the vehicle for braking — 2320

adjusting a first sub-parameter in the current parameters based on the first braking-to-stop distance and the expected braking-to-stop distance to obtain adjusted parameters — 2330

determining the adjusted parameters as target parameters of the AEB function in response to the adjusted parameters meeting an expected condition — 240

**FIG. 3**

configuring current parameters of an AEB function of a vehicle — 210

performing testing on the vehicle based on a test scenario to obtain behaviour of the vehicle under the current parameters — 220

determining, in response to the behaviour being collision, an initial velocity of the vehicle for braking and a first collision velocity of the vehicle when the collision occurs — 2301

determining a first velocity reduction of the vehicle based on the initial velocity and the first collision velocity — 2302

performing adjustment on the current parameters based on the first velocity reduction to obtain adjusted parameters — 2303

determining the adjusted parameters as target parameters of the AEB function in response to the adjusted parameters meeting an expected condition — 240

**FIG. 4**

```
┌─────────────────────────────────────────────┐
│ configuring current parameters of an AEB     │── 210
│ function of a vehicle                        │
└─────────────────────────────────────────────┘
                      │
                      ▼
┌─────────────────────────────────────────────┐
│ performing testing on the vehicle based on a │── 220
│ test scenario to obtain behaviour of the     │
│ vehicle under the current parameters         │
└─────────────────────────────────────────────┘
                      │
                      ▼
┌─────────────────────────────────────────────┐
│ determining, in response to the behaviour    │── 2301
│ being collision, an initial velocity of the  │
│ vehicle for braking and a first collision    │
│ velocity of the vehicle when the collision   │
│ occurs                                       │
└─────────────────────────────────────────────┘
                      │
                      ▼
┌─────────────────────────────────────────────┐
│ determining a first velocity reduction of    │── 2302
│ the vehicle based on the initial velocity    │
│ and the first collision velocity             │
└─────────────────────────────────────────────┘
```

```
┌──────────────────────────┐          ┌──────────────────────────┐
│ determining, in response │── 23031  │ acquiring collision risk │── 2303a
│ to the first velocity    │          │ assessment information of│
│ reduction being greater  │          │ the vehicle in response  │
│ than a first velocity    │          │ to the first velocity    │
│ threshold, an expected   │          │ reduction being less     │
│ braking-to-stop distance │          │ than or equal to a first │
│ corresponding to the     │          │ velocity threshold       │
│ initial velocity         │          └──────────────────────────┘
└──────────────────────────┘                       │
             │                                      ▼
             ▼                         ┌──────────────────────────┐
┌──────────────────────────┐          │ determining, in response │── 2303b
│ determining a maximum    │── 23032  │ to the collision risk    │
│ brake deceleration of    │          │ assessment information   │
│ the vehicle              │          │ indicating existence of  │
└──────────────────────────┘          │ a collision risk, an     │
             │                         │ expected braking-to-stop │
             ▼                         │ distance corresponding to│
┌──────────────────────────┐          │ the initial velocity     │
│ adjusting a first sub-   │── 23033  └──────────────────────────┘
│ parameter in the current │                       │
│ parameters based on the  │                       ▼
│ first collision velocity,│          ┌──────────────────────────┐
│ the expected braking-to- │          │ adjusting a first sub-   │── 2303c
│ stop distance, and the   │          │ parameter in the current │
│ maximum brake            │          │ parameters based on the  │
│ deceleration to obtain   │          │ expected braking-to-stop │
│ adjusted parameters      │          │ distance to obtain the   │
└──────────────────────────┘          │ adjusted parameters      │
                                       └──────────────────────────┘
```

```
┌─────────────────────────────────────────────┐
│ determining the adjusted parameters as       │── 240
│ target parameters of the AEB function in     │
│ response to the adjusted parameters meeting  │
│ an expected condition                        │
└─────────────────────────────────────────────┘
```

**FIG. 5**

**FIG. 6**

configuring current parameters of an AEB function of a vehicle — 210

↓

performing testing on the vehicle based on a test scenario to obtain behaviour of the vehicle under the current parameters — 220

↓

determining, in response to the behaviour being collision, an initial velocity of the vehicle for braking and a first collision velocity of the vehicle when the collision occurs — 2301

↓

determining a first velocity reduction of the vehicle based on the initial velocity and the first collision velocity — 2302

↓

acquiring collision risk assessment information of the vehicle in response to the first velocity reduction being less than or equal to a first velocity threshold — 2303a

↓

determining, in response to the collision risk assessment information indicating existence of a collision risk, an expected braking-to-stop distance corresponding to the initial velocity — 2303b

↓

adjusting a first sub-parameter in the current parameters based on the expected braking-to-stop distance to obtain the adjusted parameters — 2303c

↓

performing testing on the vehicle based on the test scenario by using the adjusted parameters as the current parameters to determine a second velocity reduction of the vehicle under the current parameters — 310

↓

adjusting a second sub-parameter in the current parameters in response to the second velocity reduction being still less than or equal to the first velocity threshold to obtain adjusted parameters — 320

↓

determining the adjusted parameters as target parameters of the AEB function in response to the adjusted parameters meeting an expected condition — 240

↓

adjusting a third sub-parameter in the current parameters in response to the collision risk assessment information indicating inexistence of a collision risk, the third sub-parameter being a collision area parameter for assessing a collision risk — 410

**FIG. 7**

**FIG. 8**

| configuring current parameters of an AEB function of a vehicle | 210 |

| performing testing on the vehicle based on a test scenario to obtain behaviour of the vehicle under the current parameters | 220 |

| performing adjustment on the current parameters based on the behaviour to obtain adjusted parameters | 230 |

| determining the adjusted parameters as target parameters of the AEB function in response to the adjusted parameters meeting an expected condition | 240 |

| using the adjusted parameters as the current parameters in response to the adjusted parameters not meeting an expected condition | 510 |

**FIG. 9**

configuring current parameters of an AEB function of a vehicle — 210

↓

performing testing on the vehicle based on a test scenario to obtain behaviour of the vehicle under the current parameters — 220

↓

performing adjustment on the current parameters based on the behaviour to obtain adjusted parameters — 230

↓

performing testing for behaviour of the vehicle under the adjusted parameters based on the test scenario — 2410

↓

determining, in response to the behaviour being pre-collision braking to stop and a braking-to-stop distance conforming with an expected braking-to-stop distance, that the adjusted parameters meet an expected condition — 2420

↓

determining the adjusted parameters as target parameters of the AEB function — 2430

**FIG. 10**

determining
behaviour of a
vehicle
610

the vehicle
braking to stop
6210

the vehicle encountering
collision
6310

determining a
first braking-to-
stop distance
6220

adjusting a first
sub-parameter
based on an
expected
braking-to-stop
distance
6230

determining a first
collision velocity
6320

determining a first
velocity reduction
6330

determining the first
velocity reduction
not to be 0
6410

adjusting a first sub-
parameter based on
an expected
braking-to-stop
distance
6420

determining the first
velocity reduction to 0
650

determining that a
collision risk is
normally issued
6610

adjusting a first sub-
parameter based on
an expected
braking-to-stop
distance
6620

performing testing
again to determine
behaviour of the
vehicle
6630

determining a
second velocity
reduction to 0
6660

adjusting a second
sub-parameter
6670

determining that the
adjusted parameters
meet an expected
condition
680

determining a
second velocity
reduction not to be 0
6640

continuing to adjust
the first sub-
parameter based on
the expected
braking-to-stop
distance
6650

determining that
no collision risk
is normally
issued
6710

adjusting a third
sub-parameter
based on a
scenario feature
6720

determining a target
parameter
690

**FIG. 11**

First Processing Module 71

Second Processing Module 72

Third Processing Module 73

Fourth Processing Module 74

**FIG. 12**

First Processing Module 71

Second Processing Module 72

Third Processing Module 73

First processing Unit 731

Second processing Unit 732

Third Processing Unit 733

Fourth Processing Unit 741

Fifth Processing Unit 742

Sixth Processing Unit 743

Fourth Processing Module 74

**FIG. 13**

Electronic Device 90

Processor 91

Input Means 93

Memory 92

Output Means 94

**FIG. 14**